# EUROPEAN PATENT APPLICATION

(11) **EP 4 726 662 A1**
(43) Date of publication of application: **15.04.2026**
(21) Application number: 25155374.9
(22) Date of filing: 31.01.2025
(51) Int. Cl.: G06T 17/00, G06F 40/00

(54) **GENERATING THREE-DIMENSIONAL REPRESENTATIONS OF OBJECTS USING DIFFUSION MODELS**

(30) Priority: 14.10.2024 US 202463706861 P; 30.01.2025 US 202519041598
(71) Applicant: Autodesk, Inc., San Francisco, CA 94105 (US)
(72) Inventor: KNÖRIG, André Daniel, San Francisco, 94105 (US); STOJANOVIC, Vladeta, 10961 Berlin (DE); GMEINER, Timotheus Anton, San Francisco, 94105 (US); KOKOTT, Christian, San Francisco, 94105 (US)
(74) Representative: Fish & Richardson P.C.

(57) **Abstract**

Methods, systems, and apparatus, including medium-encoded computer program products for a new version of the three-dimensional mesh of an object include: presenting a three-dimensional mesh of an object, wherein the three-dimensional mesh is mapped to a first two-dimensional geometry image according to a segmentation map; receiving text description that is indicative of a target characteristic for a first portion of the object; selecting a region of the mesh corresponding to the first portion of the object; detecting one or more segments of the two-dimensional geometry image that correspond to the selected region according to the segmentation map; generating, using a diffusion model, a second two-dimensional geometry image by refining the first two-dimensional image at the one or more segments according to the text description; generating a second three-dimensional mesh comprising a second plurality of vertices; and presenting the second three-dimensional mesh as a new version of the object.

## Description

### BACKGROUND

### Technical Field

This specification relates generally to Machine Learning (ML) and Computer Aided Design (CAD) and, more specifically, to techniques for using neural networks to generate and edit three dimensional (3D) models of objects. The generated 3D models can be used in any of a variety of ways. For example, generated 3D models can be used in the context of designing physical structures, which can be manufactured using additive manufacturing, subtractive manufacturing and/or other manufacturing systems and techniques, or other structures. As another example, generated 3D models can be provided as a digital asset, such as for use in animation.

### Description of Related Art

Computer graphics applications include different software products and/or services that support generation of representations of 3D objects that can be used for visualization, for example, visualization of scenes in display frames, for collaborative design creation, for animation and video rendering, etc. Computer graphics applications also include computer animation programs and video production applications where generated 3D representations of objects that can be presented in motion. 3D computer animations can be created in a variety of scenarios and in the context of different technologies. For example, characters and vehicles can be animated for computer games, animated movies and short videos, among other examples. Computer graphics software applications can be used in conjunction with subtractive manufacturing systems and techniques, such as machine cutting, electrode discharge machining, chemical machining, and waterjet machining, to generate physical entities from the designed 3D models. Such computer graphics software can also be used for conceptual design exploration of specific object types (e.g., car body shapes, wearable objects/electronics, other) by engineers who specialize in the particular domain (e.g., car design and manufacturing, product design and manufacturing, other).

Computer Aided Design (CAD) software has been developed and used to generate (3D representations of objects, and Computer Aided Manufacturing (CAM) software has been developed and used to evaluate, plan, and control the manufacture of the physical structures of those objects, e.g., using Computer Numerical Control (CNC) manufacturing techniques. In addition, CAD software has been designed to perform automatic generation of 3D geometry of one or more parts in a design (known as "topology optimization", "generative design", or "generative modelling", among others). This automated generation of 3D geometry often works within a "design domain" specified by a user or the CAD software and generates geometry typically by optimizing design objectives and respecting design constraints, which can be defined by the user, CAD software, or a third party. The design objectives can include but are not limited to minimizing waste material, minimizing the weight of the part, and minimizing the compliance, stress, maximum mass, maximum deflection under load, or other intrinsic property of the part, and are used to drive the shape synthesis process towards better designs. In addition, CAD software has been designed so as to perform automatic generation of 3D geometry (generative design) for a part or one or more parts in a larger system of parts to be manufactured. The output from generative design algorithms is typically a discretized polygon mesh, similar to the output from object scanning systems and techniques. To be useable in a computer graphics application, such polygon meshes are typically converted into modelled surfaces composed of a control mesh and control vertices that define smooth surface patches of the complex modelled surface, e.g., a polygon mesh is converted into a complex T-Spline surface model.

3D models can include 3D meshes for representing 3D geometry of variety of objects such as physical structures designed for review, processing, and productive use for manufacturing or rendering as part of rendering a scene in a virtual environment. A 3D mesh refers to a collection of polygons corresponding to a reconstructed 3D model of an object. A 3D mesh includes a collection of polygons including vertices, edges, and faces (e.g., areas bounded by the vertices and edges) that represents a geometry, e.g., a shape, of the object. In some implementations, a 3D mesh can include triangles. In some implementations, a 3D mesh can include quadrilaterals. In some implementations, a 3D mesh can include a combination of triangles, quadrilaterals, and/or other polygons having additional sides.

Neural networks can be used to facilitate generation of 3D meshes by generating 2D images. The 2D images can include two-dimensional (2D) geometry images. A 2D geometry image encodes a 3D geometry into a 2D array of pixels. For example, each pixel of a geometry image can represent a vertex position of a fixed topology mesh, and is thus a direct representation of surface geometry.

In some instances, images can be generated based on text or other images provided as input to the generation process. Advances in neural networks have provided significant progress for image generation, particularly by way of generative adversarial neural networks (in the implementations of image-to-image translation) and diffusion models for generative modeling of images (in the implementations of text-to-image generation). Text-to-image generation generally refers to the process of generating an image from a text prompt input by a user. For example, text-to-image generation processes allow content creation to be automated with natural language, thereby significantly reducing the skill required for the content creator. The text prompts can range from nouns, adjectives, styles, etc. Image-to-image translation generally refers to the process of processing an image from a source domain to transform the image into an image from a target domain that is different from the source domain. Generative adversarial neural networks can be used for producing new output data after the generative adversarial neural network is trained for a particular content generation task. For example, a generative adversarial neural network may be trained to generate new images after being trained using a large corpus of training images.

Diffusion models can be used to generate images by performing a reverse diffusion process. In a forward diffusion process, training data, e.g., a training image, is corrupted by progressively adding noise, e.g., Gaussian noise, slowly eliminating details in the training data until it becomes pure noise. Diffusion models are trained to reverse such a forward diffusion (corruption) process. Running the reverse diffusion process using a diffusion model synthesizes data from pure noise by gradually denoising it until a clean image is produced.

### SUMMARY

This specification describes a system implemented as computer programs on one or more computers in one or more locations that can support generation and editing of 3D meshes for objects of different type based on user requests including text description. The text description can be indicative of a requested geometry of a surface of an object, which can be used by the system to generate a 3D mesh for an object based on trained models using 2D geometry data.

In general, one or more aspects of the subject matter described in this specification can be embodied in one or more methods (and also one or more non-transitory computer-readable mediums tangibly encoding a computer program operable to cause data processing apparatus to perform operations), including: receiving a text description that specifies a target three-dimensional geometry of a surface of the object; generating, using a diffusion model and based on the text description, a two-dimensional geometry image that encodes the target three-dimensional geometry into a two-dimensional array of pixels, wherein each pixel of the two-dimensional array of pixels represents a vertex of a plurality of vertices of the three-dimensional mesh that is to be generated for the object; and generating, based on the two-dimensional geometry image, the three-dimensional mesh of the object for rendering at a display device of a physical device, wherein the three-dimensional mesh comprises the plurality of vertices defining a shape of the object, each vertex of the plurality of vertices having a corresponding location that is determined based on the two-dimensional geometry image.

In general, one or more aspects of the subject matter described in this specification can also be embodied in one or more methods (and also one or more non-transitory computer-readable mediums tangibly encoding a computer program operable to cause data processing apparatus to perform operations), including: presenting a three-dimensional mesh of an object, the three-dimensional mesh comprising a first plurality of vertices, wherein the three-dimensional mesh is mapped to a first two-dimensional geometry image according to a segmentation map; receiving, at a user interface of a display device, text description that is indicative of a target characteristic for a first portion of the object; selecting a region of the three-dimensional mesh corresponding to the first portion of the object; detecting one or more segments of the two-dimensional geometry image that correspond to the selected region according to the segmentation map; generating, using a diffusion model, a second two-dimensional geometry image by refining the first two-dimensional image at the one or more segments according to the text description; generating, based on the second two-dimensional geometry image, a second three-dimensional mesh comprising a second plurality of vertices, each vertex having a corresponding location that is defined by the second two-dimensional geometry image; and presenting, at the user interface, the second three-dimensional mesh as a new version of the object.

In general, one or more aspects of the subject matter described in this specification can also be embodied in one or more methods (and also one or more non-transitory computer-readable mediums tangibly encoding a computer program operable to cause data processing apparatus to perform operations), for fine-tuning a diffusion model, including: obtaining data specifying the diffusion model, the data comprising pre-trained values of parameters of the diffusion model; obtaining a fine-tuning training dataset that comprises a plurality of two-dimensional geometry images, wherein each two-dimensional geometry image of the plurality of two-dimensional images (i) characterizes a geometry of an object and (ii) is associated with a text description of the characterized geometry; and fine-tuning the diffusion model by using the fine-tuning dataset to generate a fine-tuned diffusion model, wherein the fine-tuning comprises learning fine-tuned values of at least some of the parameters of the diffusion model beginning from the pre-trained values of the parameters of the diffusion model.

In general, one or more aspects of the subject matter described in this specification can also be embodied in one or more methods (and also one or more non-transitory computer-readable mediums tangibly encoding a computer program operable to cause data processing apparatus to perform operations), for fine-tuning a diffusion model, including: obtaining a set of training images; generating descriptors (e.g., using generic terms) , using a trained machine-learning model, indicative of characteristics (e.g., shape, style, geometry, color, shading, etc.) of objects presented at the set of training images; generating queries for use in querying for objects having particular characteristics as indicated in the descriptors; and retraining a diffusion model using the generated queries to generate two-dimensional geometry images for three-dimensional geometries of an object, where the generated two-dimensional geometry images are assigned with tags defining respective one or more characteristics of each respective obj ect.

Other implementations of the aspect include corresponding systems, apparatus, and computer programs, configured to perform the actions of the methods, encoded on computer storage devices.

The present disclosure also provides a computer-readable storage medium coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

Particular embodiments of the subject matter described in this specification can be implemented to realize one or more of the following advantages. In accordance with the present disclosure, the 3D mesh generation process can be executed in a fast and simple, yet accurate manner in response to user inputs. A large number of 3D meshes can be automatically generated with minimal user intervention. For example, a user need only provide a text description that specifies a target geometry of the object, and the system can execute the generation process using the neural networks to generate multiple 3D meshes that each have the target geometry. The generation of the mesh can be performed based using the text description and generating 2D geometry images, rather than directly generating 3D data, which reduces the resource expenditure for the mesh generation as well as makes the process faster yet accurate. Furthermore, when a user would like to make changes to a 3D mesh of an object, the user can identify a portion of the 3D mesh, and the system can generate a new 3D mesh that modifies the identified portion of the 3D mesh (but the remaining portion of the 3D mesh remains unchanged) by regenerating 2D geometry image data for the identified portion. Editing of surfaces of objects can be performed faster and in an interactive manner based on user provided input that can be used to constrain a diffusion model to control an output 2D geometry image data that corresponds to user's input.

It is appreciated that methods in accordance with the present disclosure can include any combination of the aspects and features described herein. That is, methods in accordance with the present disclosure are not limited to the combinations of aspects and features specifically described herein, but also include any combination of the aspects and features provided.

The details of one or more embodiments of the subject matter described in this specification are set forth in the accompanying drawings and the description below. Other features, aspects, and advantages of the invention will become apparent from the description, the drawings, and the claims.

### BRIEF DESCRIPTION OF THE DRAWINGS

FIG. 1 shows an example of a system usable to generate 3D meshes of objects of different types for rendering at a user interface of a display device.
FIG. 2 shows a diagram of an example of a 3D mesh generation system in accordance with implementations of the present disclosure.
FIG. 3 shows an example process for generating a 3D mesh of an object in accordance with implementations of the present disclosure.
FIG. 4 shows an example of a process for editing a 3D mesh of an object in accordance with implementations of the present disclosure.
FIG. 5A shows a diagram of an example of a pre-training system for training a diffusion model.
FIG. 5B shows a diagram of an example of a fine-tuning system for fine-tuning a trained diffusion model.
FIG. 6A shows an example of a process for fine-tuning a diffusion model to be used for generating 2D geometry images in accordance with implementations of the present disclosure.
FIG. 6B is an example of a process for retraining a diffusion model to generate prompts based on generic descriptors of characteristics of 3D shapes of objects to generate 3D meshes in accordance with implementations of the present disclosure.
FIG. 7 is an example of a process for 2D parameterization of a 3D mesh.
FIG. 8 is an example of a system configured for training a 2D attribute generator neural network jointly with a 2D attribute discriminator neural network under a generative adversarial network (GAN) training framework.
FIG. 9 is an example of a system for generating a 3D mesh of an object using a 2D generator neural network.
FIG. 10 is an example of a process for generating a 3D mesh of an object.
FIG. 11 shows a schematic diagram of a data processing system including a data processing apparatus, which can be programmed as a client or as a server.

Like reference numbers and designations in the various drawings indicate like elements.

### DETAILED DESCRIPTION

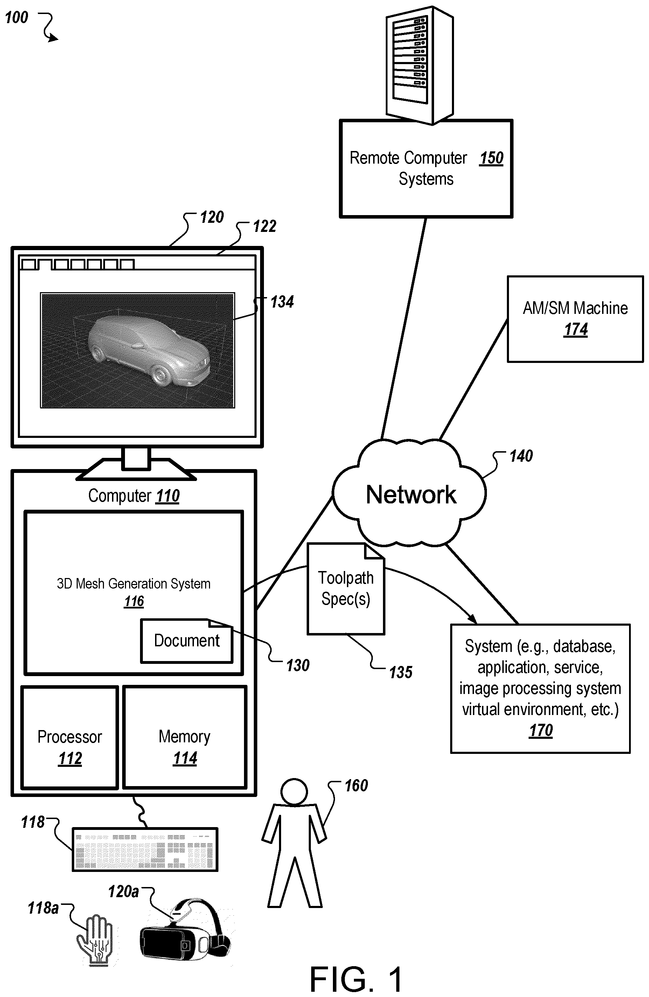

FIG. 1 shows an example of a system usable to generate 3D meshes of objects of different types for rendering at a user interface of a display device. In some implementations, a 3D mesh of an object can be generated and edited using a text description indicative of an object type. The text description can be used to constraint a machine-learning model trained on representing shapes of objects as 2D data (e.g., a 2D geometry image).

A computer 110 includes a processor 112 and a memory 114, and the computer 110 can be connected to a network 140, which can be a private network, a public network, a virtual private network, etc. The processor 112 can be one or more hardware processors, which can each include multiple processor cores. The memory 114 can include both volatile and nonvolatile memory, such as Random Access Memory (RAM) and Flash RAM. The computer 110 can include various types of computer storage media and devices, which can include the memory 114, to store instructions of programs that run on the processor 112, including a 3D mesh generation system 116, which can generate 3D meshes of objects of different types (e.g., vehicles, appliances, devices, other).

The 3D mesh generation system 116 can run locally on computer 110, remotely on a computer of one or more remote computer systems 150 (e.g., one or more third party providers' one or more server systems accessible by the computer 110 via the network 140), or both locally and remotely. Thus, the 3D mesh generation system 116 can be two or more programs that operate cooperatively on two or more separate computer processors in that one or more programs operating locally at computer 110 can offload some operations "to the cloud" by having one or more programs on one or more computers perform the offloaded operations.

In some implementations, the 3D mesh generation system 116 can be included as part of a Computer Aided Design (CAD) system which implements 3D modeling functions and includes one or more generative design processes. In these implementations, the CAD system can also run locally on computer 110, remotely on a computer of one or more remote computer systems 150, or both locally and remotely. As used herein, CAD refers to any suitable program used to design physical structures that meet design requirements, regardless of whether or not the program is capable of interfacing with and/or controlling manufacturing equipment. Thus, for example, a CAD system can include CAD program(s), Computer Aided Engineering (CAE) program(s), Computer Aided Manufacturing (CAM) program(s), etc.

As used herein, generative design refers to a process where a designer or engineer can provide a set of requirements in terms of one or more of: loads, boundary conditions, materials, initial starting shape, manufacturing constraints, or other parameters and the CAD system create various shapes that satisfy the requirements. Generative design allows the users to choose from a set of design/shape options that are generated so that specific requirements of the users are met. In some instances, the designs are used to create physical structures through 3D printing or other manufacturing processes like milling or casting.

The 3D mesh generation system 116 presents a user interface (UI) 122 on a display device 120 of the computer 110, which can be operated using one or more input devices 118 of the computer 110 (e.g., keyboard and mouse). Note that while shown as separate devices in FIG. 1, the display device 120 and/or input devices 118 can also be integrated with each other and/or with the computer 110, such as in a tablet computer (e.g., a touch screen can be an input/output device 118, 120). Moreover, the computer 110 can include or be part of a virtual reality (VR) and/or augmented reality (AR) system. For example, the input/output devices 118, 120 can include a VR/AR input glove 118a and/or a VR/AR headset 120a.

In some implementations, a user 160 interacts with the 3D mesh generation system 116 to generate and/or edit 3D meshes of objects based on text description as input. The user 160 can use the 3D mesh generation system 116 to generate and/or modify a 3D mesh 134 through interaction with a user interface of the 3D mesh generation system 116 as displayed on the display device 120.

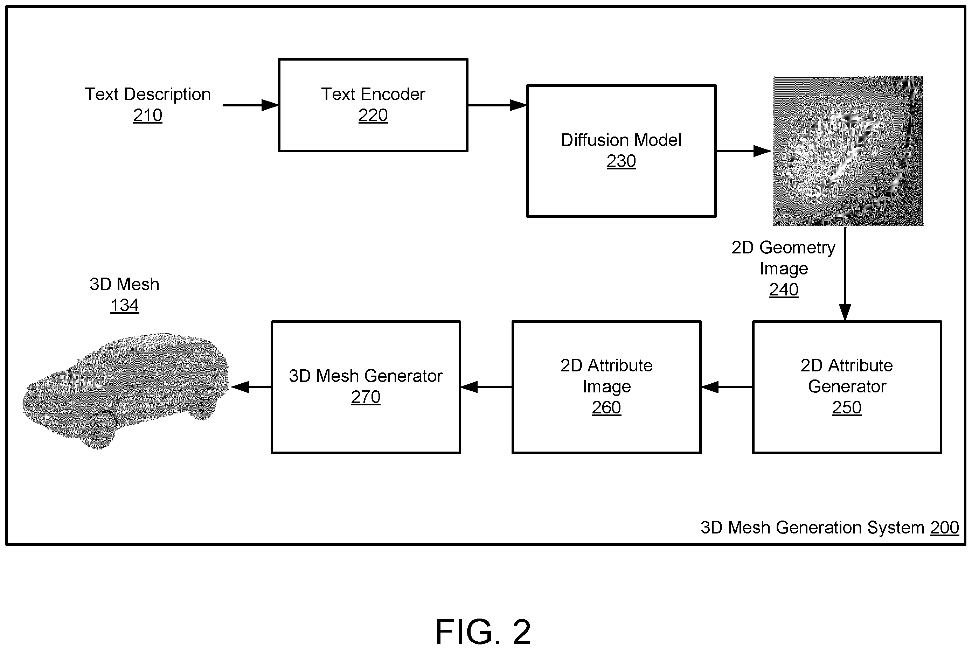

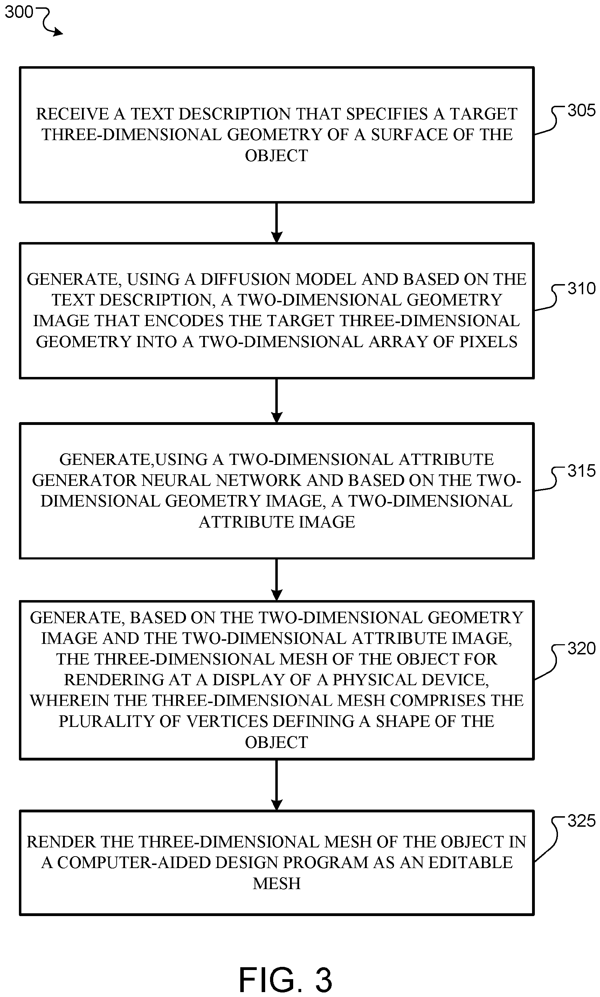

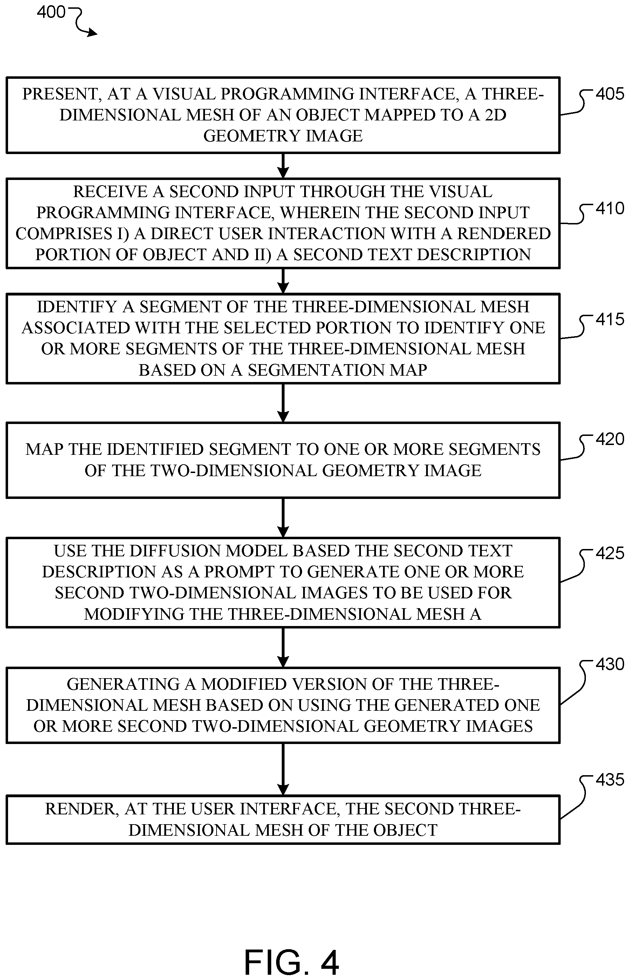

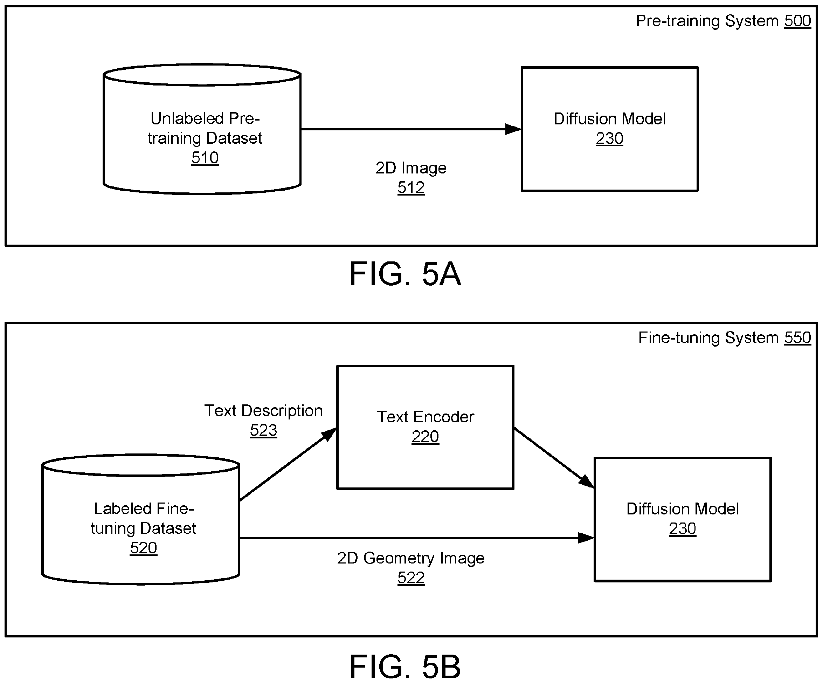

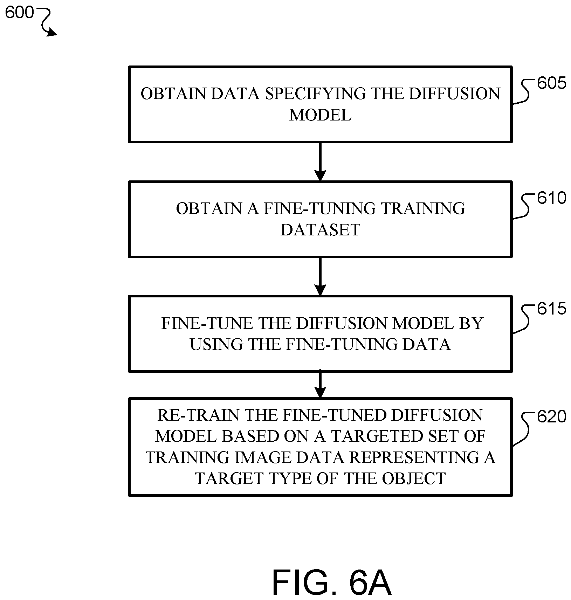

In some instances, the UI 122 can include interactive tools to receive requests for shape generation from users and to provide 3D meshes displayed at the UI 122 of the display device 120. For example, 3D meshes can be generated for objects such as vehicles, ships, aircrafts, humans, animals, trees, and buildings, among other examples. In the example of FIG. 1, the 3D mesh generation system 116 generates the 3D mesh 134 of an object that is a vehicle. Although illustrated as a car in FIG. 1, the vehicle can be any vehicle, such as a car, a van, a truck, a bus, and/or another type of vehicle. In some implementations, 3D mesh can be generated based on received user input such as a text description of a type of an object (e.g., display a sedan car). In some instances, the received text description can be used in a process of generating of a new 3D mesh representing the shape of the object as defined through the text description or in a process of editing a displayed 3D mesh based on shape modifications determined according to the received text description. In some instances, the generation of a new 3D mesh can be performed as described in relation to FIGS. 2 and 3. In some instances, editing of a 3D mesh can be performed as described in relation to FIGS. 4. In some instances, the generation of a new 3D mesh or modifying the mesh can be performed based on constraining a trained and fine-tuned diffusion model, for example, the diffusion model 230 of FIG. 2. In some instances, the training of the diffusion model can be performed as described in relation to FIGS. 5A, 5B, and 6A.

After having generated the 3D mesh 134, the 3D mesh generation system 116 can then provide the 3D mesh 134 as an output, e.g., by providing the 3D mesh 134 to be presented to the user 160 within the user interface (UI) 122 on the display device 120 of the computer 110. Additionally or alternatively, after having generated the 3D mesh 134, the 3D mesh generation system 116 can provide the 3D mesh 134 to one or more system 170. In some instances, the 3D mesh 134 can be provided to the system 170 for storage or further processing. The system 170 can be a database, an application, a service, an image processing system, a virtual environment, other. The system 170 which can be directly connected to the computer 110, or connected via a network 140, as shown. This can involve a post-process carried out on the local computer 110 or a cloud service to export the 3D mesh 134 to an electronic document from which instructions for manufacturing of a physical structure can be generated and provided, for example, an additive manufacturing (AM) or subtractive manufacturing (SM) machine 174 for use in manufacturing a structure using various cutting tools, etc., where the structure corresponds to at least a portion of the 3D mesh 134. In some instances, the 3D mesh can be stored in the document 130 and/or provided over the network 140 to the system 170 which can be a local or external storage space. In some instances, the 3D mesh can be converted into another data structure representing the object. For example, the 3D mesh can be converted into a spline-based 3D object representation, which can then be used to generate, e.g., a Class A surfaces for automobile or aircraft designs. In some instances, CAD software can be used to automatically generate 3D geometry (generative design) for a part or a set of parts in a larger object to be manufactured (e.g., car, machinery). The output from the generative design can be a polygon mesh, which can be converted into modelled surfaces that can have a spline-based representation. The modelled surface can be composed of a control mesh and control vertices that define smooth surface patches of the complex modelled surface. For example, CAD software can create and store 3D representations of geometry of objects by using spline surface models including B-Spline surfaces, Non-Uniform Rational Basis Splines (NURBS), Non-Uniform Catmull-Clark (NURCCS) surfaces, Catmull-Clark subdivision surfaces, T-Splines, T-NURCCs (Non-uniform Rational Catmull-Clark Surfaces with T-junctions) surfaces (as a superset of both T-splines and Catmull-Clark surfaces), among other example models.

In some implementations, once the user 160 is satisfied with a 3D mesh 134 of an object, the 3D mesh 134 can be stored as a 3D mesh document 130 and/or used to generate another representation of the 3D mesh that can be used for generating instructions, e.g., a toolpath specification 135 usable for manufacturing by a manufacturing system. This can be done upon a direct request by the user 160, or based on another action of the user that can automatically trigger the generation of instructions.

FIG. 2 is a diagram of an example of a 3D mesh generation system 200. The 3D mesh generation system 200 can be substantially similar to the 3D mesh generation system 116 of FIG. 1. In some instances, the 3D mesh generation system 200 can be an example of a system implemented as computer programs on one or more computers in one or more locations that generates 3D meshes of objects based on user input and relying on machine learning techniques in accordance with the present implementations. The 3D mesh generation system 200 can include a text encoder neural network 220 (or "text encoder 220" for short), a diffusion model neural network 230 (or "diffusion model 230" for short), a 2D attribute generator neural network 250 (or "2D attribute generator 250" for short), and 3D mesh generator 270.

For example, the 3D mesh generation system 200 can generate 3D meshes (e.g., such as the 3D meshes 134 of FIG. 1) in response to user requests and can provide the 3D meshes 134 for presentation to users, for storage, future purposes or processing. The 3D mesh that is generated can include a collection of polygons corresponding to a reconstructed 3D model of an object. In some instances, the collection of polygons includes vertices, edges, and faces (e.g., areas bounded by the vertices and edges) that represents a geometry, e.g., an 3D surface, of the object.

For example, the generated 3D mesh 134 can be provided to a system, such as the system 170 of FIG. 1, for storage and distribution to another system. For example, the generated 3D mesh 134 can be provided for rendering to a display device, where the displayed 3D mesh can be provided in a collaborative environment to further modify the shape of the object and edit the 3D mesh based on input received from users (e.g., further text description indicative of modifications for portions of the 3D mesh and/or user interaction with at least one portion of the 3D mesh).

In some implementations, the 3D mesh generation system 200 uses the diffusion model 230 to generate, conditioned at least on text included in a text description 210, a 2D geometry image 240 that encodes a 3D geometry into a 2D array of pixels, as values of the pixels representing vertex displacement. In some instances, the 3D mesh generation system 200 includes the 2D attribute generator 250 that is configured to generate a 2D attribute image 260 based on the 2D geometry image 240. The 3D mesh generator 270 can be used to generate the 3D mesh 134 of the object based on the 2D geometry image 240 and the 2D attribute image 260.

In some implementations, the diffusion model 230 has been configured through training (e.g., pre-training and fine-tuning as described in relation to FIGS. 5A, 5B, and 6A) to generate 2D geometry images 240 conditioned on prompt text received from a user of the 3D mesh generation system 200 (e.g., the text description 210). In some instances, the diffusion model 230 may also be referred to as a "fine-tuned diffusion model 230", for example, fine-tuned as described in relation to FIGS. 5B and 6A. The text description 210 can be received as user input provided through a request to generate a shape of an object of a given type (e.g., a car). In some implementations, the 3D mesh generation system 200 can receive the text description(s) 210 as part of or in association with the user request or as request(s) provided through other systems or applications. In implementations the user can provide the prompt text using one or more input devices, e.g., the one or more input devices 118 of the computer 110 as depicted in FIG. 1. In some instances, the text description 210 can be indicative of the type of the object (e.g., car) that can be used to provide a result 3D mesh.

In some instances, the prompt text that can be used to condition the diffusion model 230 can include the text description 210. The text description 210 can be provided in a natural language that specifies a target 3D geometry of a surface of an object. In some cases, the text description 210 explicitly specifies the 3D geometry, e.g., by defining what geometry, e.g., what shape, the object should have. An example of such a text description 210 can be: "a four-seated sporty coupe car with two doors, a folding roof, and a sloping rear." In other cases, the text description implicitly specifies the 3D geometry, e.g., by defining a type or category of the object, e.g., a manufacturer or a model of a vehicle. An example of such a text description 210 can be: "a [model name] car made by [manufacturer name]."

In some implementations, the 3D mesh generation system 116 can use the text encoder 220 to process the text description 210 to generate an encoded representation of the text description 210, and then conditions (one or more layers of) the diffusion model 230 on the encoded representation of the text description 210 to generate the 2D geometry image 240 by performing a reverse diffusion process. For example, the encoded representation of the text description 210 can be in the form of one or more embedding vectors.

In implementations, the text encoder 220 can include any appropriate types of neural network layers (e.g., embedding layers, fully connected layers, and so forth) in any appropriate number (e.g., two (2) layers, or five (5) layers, or ten (10) layers) and connected in any appropriate configuration (e.g., as a directed graph of layers). For example, the text encoder 220 can be configured as a feed-forward neural network, e.g., a transformer neural network, or a recurrent neural network, e.g., a long short-term memory neural network.

In some implementations, the diffusion model 230 can be trained and fine-tuned to generate 2D geometry images 240 as described in relation to FIGS. 5A, 5B, and 6A. The diffusion model 230 can be any appropriate conditional diffusion neural network that can be configured to generate a 2D geometry image 240 by performing a reverse diffusion process conditioned at least on the encoded representation of the text description 210. In some implementations, the reverse diffusion process is performed in a pixel space of the 2D geometry image 240 during which noise is progressively removed from a noisy version of the 2D geometry image 240 to provide the 2D geometry image 240.

For example, the reverse diffusion process can be performed according to the techniques described at Ho, Jonathan, et al. "Denoising diffusion probabilistic models." Advances in neural information processing systems 33 (2020): 6840-6851, which is hereby incorporated by reference. A diffusion probabilistic model, which can be used to implement a parameterized Markov chain, is trained using variational inference to produce samples that match the data after certain time. Transitions of this chain are learned to reverse a diffusion process, which is a Markov chain that gradually adds noise to the data in the opposite direction of sampling until signal is destroyed.

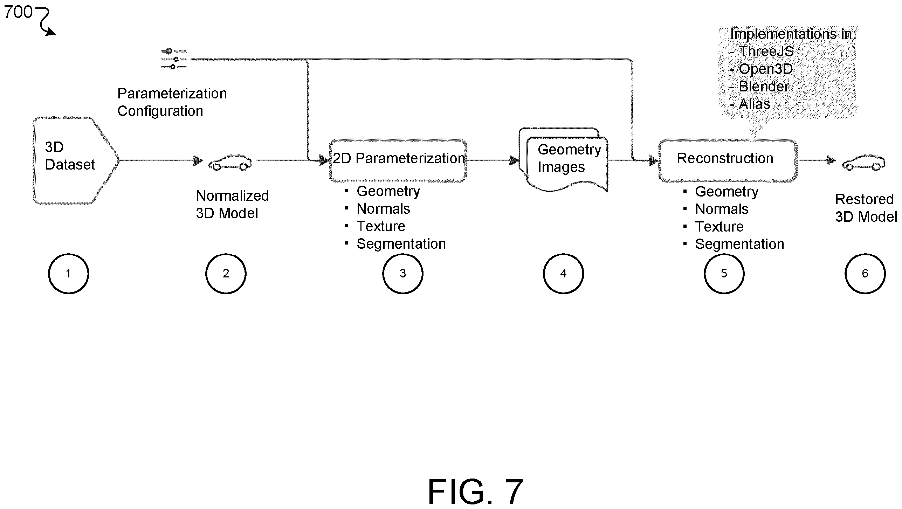

In some instances, the 2D geometry image 240 can be generated to capture the 3D surface of an object as a 2D array of values through implicit surface parametrization, which includes a bi-directional mapping from an object's surface to a 2D plane. Surface parametrization will be discussed in more detail in FIG. 7 below. In some instances, based on the parametrization, the 2D plane is sampled to create a 3-channel *nxn* image where each pixel represents an (x, y, z) vertex location of a new geometry image mesh, which is independent from the original objects' mesh topology or representation. As such, the 2D geometry image 240 includes a plurality of pixels that are arranged in a 2D array, where there is a one-to-one mapping relationship between the pixels of the 2D array and the vertices of the 3D mesh for the 3D surface. That is, each pixel included in the 2D geometry image 240 has a value that defines a location of a respective one of the plurality of vertices included in the 3D mesh 134 of the object. In some implementations, the locations are definite locations, e.g., Cartesian (X, Y, Z) positions defined in a predetermined coordinate system. In some implementations, the locations are relative locations, e.g., each pixel has a value that defines a displacement relative to one of the plurality of vertices or another predetermined point in the 3D mesh 134.

In some implementations, the reverse diffusion process is performed in a latent space, e.g., in a latent space that is lower-dimensional than the pixel space, during which noise is progressively removed from a noisy version of a latent image to provide the latent image. That is, the images operated on by the diffusion model 230 are latent images and the values for the pixels of the images are learned, latent values rather than pixel values of the 2D geometry image 240.

For example, the diffusion model 230 can be provided based on fine-tuning of a diffusion model, such as one of the diffusion model neural networks described in Rombach, Robin, et al. "High-resolution image synthesis with latent diffusion models." Proceedings of the IEEE/CVF conference on computer vision and pattern recognition. 2022, and Saharia, Chitwan, et al. Photorealistic text-to-image diffusion models with deep language understanding. Advances in Neural Information Processing Systems," 35:36479-36494, 2022, which is hereby incorporated by reference. Specifically, Rombach, Robin, et al. describes a latent diffusion model that operates in a latent space (e.g., that has a different, e.g., lower, dimensionality, than an image space), while Saharia, Chitwan, et al. describes a text-to-image diffusion model that operates in an image space.

In those implementations, the diffusion model 230 can be associated with an image encoder neural network to encode 2D geometry images into the latent space and an image decoder neural network that receives an input that includes a latent representation of a 2D geometry image 240 and decodes the latent representation to reconstruct the 2D geometry image 240. For example, the encoder and decoder can have been trained jointly on an image reconstruction objective, e.g., a VAE objective, a VQ-GAN objective, or a VQ-VAE objective.

In either implementation, the diffusion model 230 can include multiple neural network layers of any appropriate type (e.g., convolutional layers, fully connected layers, attention layers, and so forth), where each of the layers of the diffusion model 230 can be conditioned on the encoded representation of the text description 210. For example, each layer can receive a layer input that includes the encoded representation of the text description 210 and the output of a preceding layer, and process the layer input to generate a layer output of the layer.

In some implementations, the diffusion model 230 can have been pre-trained, e.g., by the 3D mesh generation system 200 or another training system, on a large set of images, e.g., using a denoising score-matching objective, to learn pre-trained values of parameters of the diffusion model 230, and then fine-tuned on a fine-tuning dataset to update the pre-trained values of at least some of the parameters of the diffusion model. The fine-tuning dataset can include a plurality of 2D geometry images. Each 2D geometry image (i) characterizes a geometry of an object and (ii) is associated with a text description of the characterized geometry. In some implementations, the pre-training and fine-tuning can be performed as described in relation to FIGS. 5A, 5B, and 6A.

In some implementations, the 2D attribute generator 250 can be configured through training to generate the 2D attribute image 260 based on the 2D geometry image 240, i.e., to translate the 2D geometry image 240 into the 2D attribute image 260. The 2D attribute image 260 has the same dimension as the 2D geometry image 240. That is, the 2D attribute image 260 includes the same plurality of pixels that are arranged in the same 2D array as the 2D geometry image 240, but the value(s) for a pixel included in the 2D attribute image 260 will differ from the value for the same pixel included in the 2D geometry image 240.

In particular, each pixel included in the 2D attribute image 260 can have one or more attribute values that define one or more attributes of a corresponding vertex (for the 3D mesh 134) represented by a respective pixel of the 2D geometry image 240. Such attributes can for example include the textures, colors, surface normals, occlusions, and object or semantic segmentations of the 3D mesh of the object. For example, for each pixel included in the 2D geometry image 240, the 2D attribute image 260 can include one or more of: (1) a texture value that defines a texture of the 3D mesh 134 of the object at the location defined by the value of the pixel, (2) a color value that defines a color of the 3D mesh 134 of the object at the location defined by the value of the pixel, (3) an occlusion value that defines an occlusion (e.g., an ambient occlusion or a shading) of the 3D mesh 134 of the object at the location defined by the value of the pixel, (4) a segmentation value that defines a segmentation of the 3D mesh 134 of the object at the location defined by the value of the pixel, e.g., a segmentation value that assigns a corresponding portion of the 3D mesh 134 of the object at the location to a component (or segment) from a plurality of constituent components (or segments) identified for the object.

The 2D attribute generator 250 can be any appropriate generative neural network that has been trained to translate 2D geometry images into corresponding 2D attribute images. In some implementations, the 2D attribute generator 250 can have been trained jointly with a 2D attribute discriminator neural network under a generative adversarial network (GAN) training framework.

For example, the 2D attribute generator 250 can be a generator neural network that can be trained and configured for use as the trained XD attribute generator as described in Alhaija, Hassan Abu, et al. "XDGAN: Multi-modal 3D shape generation in 2D space." arXiv preprint arXiv:2210.03007 (2022), which is hereby incorporated by reference. As another example, the 2D attribute generator 250 can be a generator neural network that can be trained and configured for use as the generator (that has a "U-Net"-based architecture) as described in Isola, Phillip, et al. "Image-to-image translation with conditional adversarial networks." Proceedings of the IEEE conference on computer vision and pattern recognition. 2017, which is hereby incorporated by reference.

The 3D mesh generator 270 can generate the 3D mesh 134 of the object based on the 2D geometry image 240 and the 2D attribute image 260. The 3D mesh generator 270 can implement a mesh generation technique to create the 3D mesh 134 leveraging both the geometry information encoded in the 2D geometry image 240 and the attribute information (e.g., textures, colors, surface normals, occlusions, or object or sementic segmentations information) encoded in the 2D attribute image 260.

In some instances, the 3D mesh generator 270 can map i) the location information for pixels of the 2D geometry image 240 that is encoded in the 2D geometry image 240 and ii) the attribute information defined for pixels in the 2D geometry image 240 that are encoded in the 2D attribute image 260 to a shared 3D space defined for generating the 3D mesh 134. The 3D mesh 134 has the same number of vertices as the number of pixels in the 2D geometry image 240. Based on such mapping each vertex of the plurality of vertices included in the 3D mesh 134 of the object can have a location that is defined by a corresponding pixel in the 2D geometry image 240 and attributes (e.g., texture, color, occlusion, or segmentation) that are defined by the same corresponding pixel in 2D attribute image 260.

For example, the 3D mesh generator 270 can produce the 3D mesh 134 of the object based on the 2D geometry image 240 and the 2D attribute image 260 by applying a meshing technique of the meshing techniques described in Gu, X., Gortler, S. J., & Hoppe, H. (2002, July). "Geometry images." In Proceedings of the 29th annual conference on Computer graphics and interactive techniques (pp. 355-361) and Hirche, J., Ehlert, A., Doggett, M. C., & Guthe, S. (2004, May). "Hardware Accelerated Per-Pixel Displacement Mapping." In Graphics interface (Vol. 2, No. 4). Specifically, Gu, X., et al. describes techniques for generating (an approximate reconstruction of) a 3D mesh by applying linear basis functions (triangles) to a 2D geometry image to define the reconstruction interpolant for geometry, while Hirche, J., et al. describes an algorithm that uses pixel shaders to render a displacement mapped triangle mesh and that supports parallel processing.

FIG. 3 shows an example process 300 for generating a 3D mesh of an object in accordance with implementations of the present disclosure. For convenience, the process 300 will be described as being performed by a system of one or more computers located in one or more locations. For example, a 3D mesh generation system, e.g., the 3D mesh generation system 116 depicted in FIG. 1 or the 3D mesh generation system 200 depicted in FIG. 2, appropriately programmed in accordance with this specification, can perform the process 300.

At 305, the system receives a text description that specifies a target 3D geometry of a surface of an object. The text description is for use in generating a 3D mesh of the object. The 3D mesh that is to be generated will include a plurality of vertices generated to represent the shape of the surface of the object. In some instances, the text description can be provided by a user of the system using one or more input devices, for example, received from the user 160 of FIG. 1. In some instances, the text description can be substantially similar to the text description 210 as described in relation to FIG. 2.

At 310, the system generates a 2D geometry image by using a diffusion model. In some instances, the diffusion model can be a conditional diffusion model that is configured to generate the 2D geometry image by performing a reverse diffusion process conditioned on the text description. The diffusion model can be substantially similar to the diffusion model 230 of FIG. 2, and can be pre-trained and fine-tuned as described in relation to FIGS. 5A, 5B, and 6A. The 2D geometry image, which is generated as a result of the reverse diffusion process, is a 2D data representation that encodes the target 3D geometry as defined in the received text description into a 2D array of pixels. Each pixel of the 2D array of pixels represents a vertex of the plurality of vertices of the 3D mesh that is to be generated for the object.

In implementations, at each reverse diffusion step in reverse diffusion process, the diffusion model can be configured to process a diffusion input that includes: (i) a current representation of the 2D geometry image (as of the reverse diffusion step) and (ii) an encoded representation of the text description to generate a diffusion output from which an updated representation of the 2D geometry image can be derived. For example, the diffusion output can be an estimate of the noise that needs to be added to the 2D geometry image, to arrive at the current representation of the 2D geometry image, and the system can generate the updated representation of the 2D geometry image by removing the estimated noise from the current representation of the 2D geometry image.

If the reverse diffusion step is the first reverse diffusion step in the reverse diffusion process, the current representation is an initial representation. For example, such an initial representation can include, for each pixel included in the 2D geometry image, one or more randomly sampled values. For any subsequent reverse diffusion step, the current representation is the updated representation that has been generated in the immediately preceding reverse diffusion step.

At 315, the system generates, using 2D attribute generator neural network, a 2D attribute image based on the 2D geometry image. The 2D attribute image has the same dimension as the 2D geometry image. That is, it includes the same 2D array of pixels as the 2D geometry image, but different values for the same 2D array of pixels than the 2D geometry image. The 2D attribute generator neural network can be substantially the same as the 2D attribute generator 250 of FIG. 2. For example, for each pixel included in the 2D geometry image, the 2D attribute image can include one or more attribute values that define one or more attributes of a corresponding vertex represented by the pixel. Such attributes can for example include the textures, colors, surface normals, occlusions, and object or semantic segmentations of the 3D mesh of the object.

At 320, the system generates, based on the 2D geometry image and the 2D attribute image, a 3D mesh of the object. The 3D mesh includes the plurality of vertices. Collectively, the plurality of vertices defines a shape of the object. Each vertex of the plurality of vertices has a corresponding location that is defined by the 2D geometry image that has been generated at 310. Each vertex of the plurality of vertices has one or more attributes that are defined by the 2D attribute image that has been generated at 315.

At 325, the system provides the 3D mesh of the object for rendering. Rendering the 3D mesh can involve computing at least a portion of the surface of the object based on the 3D mesh, and then rendering, based on the generated 3D mesh, at least the portion of the surface of the object. The rendered 3D mesh of the object can then be presented for display, e.g., through the user interface (UI) 122 on the display device 120 of the computer 110 of FIG. 1. In some instances, the 3D mesh can be rendered as part of prototyping animations or other visualizations such as scene generation using the generated 3D mesh.

In some implementations, the 3D mesh can be rendered as an editable mesh that can be edited by the user in a computer-aided design program, e.g., to facilitate a generative design process. In some instances, the editing of the presented mesh can be performed based on provided text input by a user that can be used to modify a portion of the mesh using techniques as described in relation to FIG. 4.

In some implementations, prior to outputting the 3D mesh of the object for rendering, the system can apply one or more post-processing operations on the 3D mesh of the object. Thus, the 3D mesh to be rendered is the post-processed 3D mesh. One example of the post-processing operation is removal of ostensibly implausible components from the 3D mesh. The removal operation can make use of the information about the object or semantic segmentations of the 3D mesh of the object that is included in the 2D attribute image.

FIG. 4 shows another example process 400 for editing a 3D mesh of an object in accordance with implementations of the present disclosure. For convenience, the process 400 will be described as being performed by a system of one or more computers located in one or more locations. For example, a 3D mesh generation system, e.g., the 3D mesh generation system 116 depicted in FIG. 1, the 3D mesh generation system 200 depicted in FIG. 2, and appropriately programmed in accordance with this specification, can perform the process 400.

At 405, the system presents a 3D mesh of an object at a visual programming interface provided at a display device (e.g., the UI 122 of the display device 120 of the computer 110 of FIG. 1). The 3D mesh includes a first plurality of vertices. The 3D mesh can be mapped to a 2D geometry image, generated for the 3D mesh. For example, the 2D geometry image can be generated during the generation of the 3D mesh as described in relation to FIG. 3, or generated for a provided 3D mesh by using generative techniques including using a generative adversarial network as described in in "Alhaija, Hassan Abu, et al. 'XDGAN: Multi-modal 3D shape generation in 2D space.' arXiv preprint arXiv:2210.03007 (2022) which is hereby incorporated by reference. ) The 3D mesh can be mapped to the 2D geometry image according to a segmentation map, which includes a mapping between segment(s) of the 3D mesh and segment(s) of the 2D geometry image. The 2D geometry image includes a 2D array of pixels, where each pixel represents a location of one of the first plurality of vertices included in the 3D mesh. The 2D geometry image can be substantially similar to the 2D geometry image 240 generated during the generation of the 3D mesh 134 as described in relation to FIG. 2.

At 410, the system receives a second input through the visual programming interface. The second input includes i) a direct user interaction with a rendered portion of object and ii) a second text description. For example, the user can interact with a portion of the visualized 3D mesh, e.g., through a user device such as a mouse, through a gesture or a voice instruction recognized by the visual programming interface, or other. The direct user interaction can include a select of a portion of the rendered portion of the object to request a modification for the selected portion.

At 415, in response to receiving the second input, a segment of the 3D mesh associated with the selected portion can be identified. The identified segment can be used to identify one or more segments of the 3D mesh based on the segmentation map. For example, the user can provide a selection of a region of the 3D mesh corresponding to the first portion of the object, such as a left door of a 3D mesh generated for a car. Based on interacting with a portion that corresponds to the door region, segments associated with the region can be identified. In the example of the car, the car is symmetrical, and the segment associated with the left door can be associated with the segment corresponding to the right door, or to all the door of the car. The association between the segments of the car can be predefined or can be dynamically obtained in response to receiving user selection. For example, the selected segment can be identified for triggering a modification for a target characteristic such as a target geometry, that is to be applied to segments of the car. For example, the geometry and/or other visual characteristic of the doors can be modified. The 3D mesh can be associated with an initial geometry for that selected segment, and the requested modification can be for a target geometry that is different geometry, e.g., to modify the geometry of the door to represent a door with side bars, or to have a door that has a handle that does not change the smooth outer surface of the door.

At 420, the identified one or more segments are mapped to one or more segments of the two-dimensional geometry image according to a segmentation map. The segmentation map can be generated for the 3D mesh in relation to the 2D geometry images generated for the 3D mesh to provide a bi-directional reference from portions including pixels (or ranges of pixels) of the 2D geometry image to portions of the 3D mesh including corresponding sets of vertices.

At 425, the second text description is used as a prompt to the diffusion model to generate one or more second 2D images to be used for modifying the three-dimensional mesh at the locations of the one or more segments of the three-dimensional mesh. The second 2D geometry image includes a 2D array of pixels, where each pixel represents a location of one of a second plurality of vertices included in a second 3D mesh.

In particular, the system refrains from updating the remaining segments of the first 2D geometry image that do not correspond to the selected region. In this way, the second 2D geometry image will include some segments that are different from the first 2D geometry image and some other segments that are identical with the first 2D geometry image.

In implementations the system can do this by generating a 2D mask that identifies the one or more segments of the 2D geometry image that correspond to the selected region. The 2D mask is a digital representation of those areas (segments) of the 2D geometry image that correspond to the selected region of the 3D mesh, and those areas (segments) that do not correspond to the selected region of the 3D mesh. For example the mask can be a binary mask, that has the same dimension as the 2D geometry image, and assigns each pixel of the 2D array of pixels of the 2D geometry image as either part of the selected region or not part of the selected region. The system can then process the text description received at 410 and the 2D mask by using the diffusion model 230 to generate the second 2D geometry image.

At 430, the system generating a modified version of the three-dimensional mesh based on using the generated one or more second two-dimensional geometry images to modify the three-dimensional mesh based on mapping according to the segmentation map generates, based on the second 2D geometry image, the second 3D mesh. The second 3D mesh includes the second plurality of vertices. Each vertex has a corresponding location that is defined by the second 2D geometry image.

At 435, the system presents the second 3D mesh of the object for display, e.g., through the user interface (UI) 122 on the display device 120 of the computer 110 of FIG. 1.

FIG. 5A is a diagram of an example pre-training system 500 for training a diffusion model. The pre-training system 500 is an example of a system implemented as computer programs on one or more computers in one or more locations that pre-trains a diffusion model, such as the diffusion model 230 of FIG. 2, on an unlabeled pre-training dataset 510 to determine pre-trained values of the parameters of the diffusion model. The unlabeled pre-training dataset 510 can include a plurality of 2D images 512, e.g., a corpus of 2D images that are available on the Internet. Examples of the 2D image 512 include any digital image that may be captured by a scanner, a camera, a specially-adapted sensor array (such as CMOS array), a microscope, a smartphone camera, a video camera, etc. Moreover, the plurality of 2D images need not be labeled. That is, the unlabeled pre-training dataset 510 need not include textual information associated with the plurality of 2D images, e.g., need not include any text data that is descriptive of content of the images.

As part of the pre-training, the pre-training system 500 updates the values of the parameters of the diffusion model 230 based on optimizing a pre-training objective function using batches of 2D images 512 sampled from the unlabeled pre-training dataset 510. For example, the pre-training objective function can be a denoising score-matching objective function.

FIG. 5B is a diagram of an example fine-tuning system 550 for fine-tuning a trained diffusion model. The fine-tuning system 550 is an example of a system implemented as computer programs on one or more computers in one or more locations that fine-tunes a diffusion model, such as the pre-trained diffusion model of FIG. 5A, on a labeled fine-tuning dataset 520 to determine fine-tuned values of the parameters of the diffusion model, and provide a fine-tuned diffusion model to be used at a 3D mesh generation system for generating 2D geometry images as described in relation to FIGS. 1, 2, 3, and 4.

The labeled fine-tuning dataset 520 can include a plurality of 2D geometry images 522. Each 2D geometry image 522 includes a 2D array of pixels that characterize a 3D geometry of an object. That is, each 2D geometry image 522 encodes a 3D geometry into a 2D array of pixels. Unlike the unlabeled pre-training dataset 510, the plurality of 2D geometry images 522 are labeled. That is, the labeled fine-tuning dataset 520 stores each 2D geometry image 522 in association with a text description 523 that describes, i.e., either explicitly or implicitly in a natural language, the 3D geometry of the object characterized by the 2D array of pixels in the 2D geometry image 522.

As part of the fine-tuning, the fine-tuning system 550 updates the values of some or all of the parameters of the diffusion model based on optimizing a fine-tuning objective function using batches of 2D geometry images 522 and their associated text descriptions 523 sampled from the labeled fine-tuning dataset 520. For example, the fine-tuning objective function can also be a denoising score-matching objective function that evaluates a quality of a training diffusion output generated by the diffusion model based on processing (i) a 2D geometry image 522 and (ii) an encoded representation of the text description 523 that is generated by a text encoder neural network (e.g., the text encoder neural network 220 of FIG. 2). Based on fine-tuning system 550, a diffusion model can be trained and configured to support 2D geometry image generation in the context of 3D mesh generation based on text input as described in the present disclosure.

In particular, the fine-tuning system 550 updates the values of some or all of the parameters of the diffusion model beginning from their pre-trained values that have been determined by using the pre-training system 500, i.e., rather than from their initial values. In some implementations, the fine-tuning system 550 can only update some parameters of the diffusion model while holding other parameters of the diffusion model fixed to their pre-trained values. In some implementations, the fine-tuning system 550 can add one or more additional layers, e.g., either in place of or in addition to existing layers of the diffusion model, and specifically learns the fine-tuned values of the parameters of the one or more additional layers.

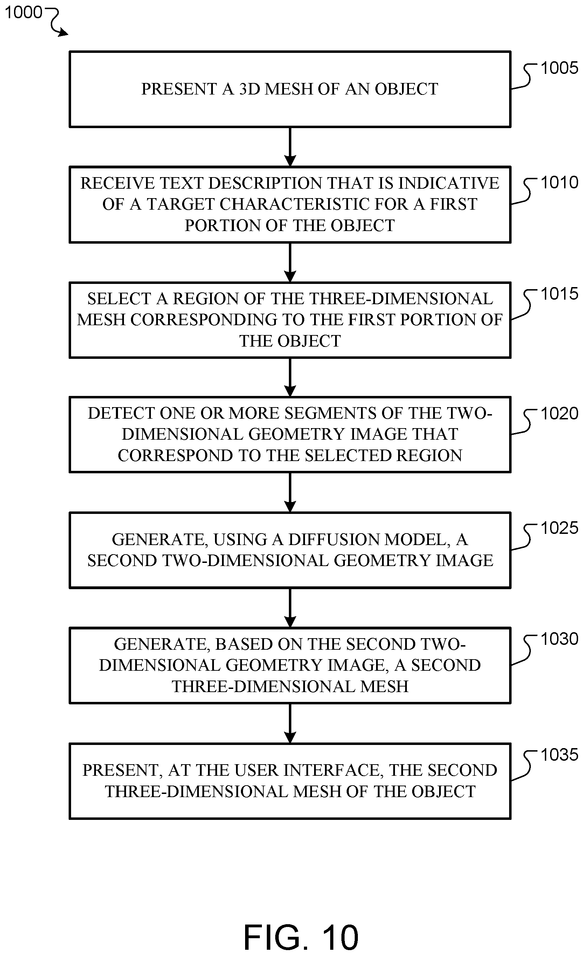

In some implementations, the fine-tuning system 550 fine-tunes the text encoder neural network (which generates the encoded representations of the text descriptions 523 for processing by the diffusion model) together with the diffusion model. In some implementations, the fine-tuning system 550 refrains from fine-tuning the text encoder neural network 220 and only fine-tunes the diffusion model to generate a fine-tuned diffusion model such as the diffusion model 230 used for generating the 2D geometry image based on text description of the target geometry of an object. In some instances, the fine-tuned diffusion model can be used in the context of editing 3D meshes to support local modification of the mesh by modifying the mapped 2D geometry data rather than to modify 3D data, thus to optimize the processing by using 2D data that is faster to process with fewer computing resources and yet providing accurate result for the modified geometry. The modification of the geometry as part of editing requested by a user interacting with a displayed 3D mesh can be performed in the context of the method 400 of FIG. 4 or as described in relation to the in-paining process of FIG. 10. The received input for modification can be used to constraint the fine-tuned diffusion model to generate 2D geometry data for a portion of the 3D mesh as modified 2D geometry data that can be used for generating a new version of the 3D mesh.

FIG. 6A shows an example of a process 600 for fine-tuning a diffusion model to be used for generating 2D geometry images in accordance with implementations of the present disclosure. For convenience, the process 600 will be described as being performed by a system of one or more computers located in one or more locations. For example, a fine-tuning system, e.g., the fine-tuning system 550 depicted in FIG. 1, appropriately programmed in accordance with this specification, can perform the process 600.

At 605, the system obtains data specifying a diffusion model. The diffusion model can have been pre-trained by the system, or by a different system, e.g., the pre-training system 500 of FIG. 5A. The data can include data defining the pre-trained values of the parameters of the diffusion model, and, optionally, data defining the architecture of the diffusion model.

At 610, the system obtains a fine-tuning training dataset that includes a plurality of 2D geometry images. Each 2D geometry image characterizes a geometry of an object. Each 2D geometry image is labeled, i.e., is associated with a text description of the characterized geometry. For example, a 2D geometry image can include a 2D array of pixels that represent an exterior of a 3D shape of the object, and the associated text description can include text in some natural language that describes the exterior of the 3D shape of the object.

The system can receive the fine-tuning training dataset in any of a variety of ways. For example, the system can receive fine-tuning training dataset as an upload from a user of the system over a network, e.g., using an application programming interface (API) made available by the system. As another example, the system can generate the fine-tuning training dataset for training the diffusion model based on a larger corpus of images available on the Internet, for example, for a type of an object, such as a car. As another example, the system can receive an input from a user specifying which data that is already maintained by the system or another server that is accessible by the system should be used as the fine-tuning training dataset for training the neural network.

At 615, the system fine-tunes the diffusion model by using the fine-tuning dataset to generate a fine-tuned diffusion model. The fine-tuning involves learning fine-tuned values of at least some of the parameters of the diffusion model beginning from the pre-trained values of the parameters of the diffusion model based on optimizing a fine-tuning objective function.

Once the fine-tuning is complete, the system can output data defining the fine-tuned values of the parameters of the diffusion model, and, optionally, data defining the architecture of the diffusion model to another system, e.g., to the 3D mesh generation system 116 of FIG. 1, to the 3D mesh generation system 200 of FIG. 2, in the context of methods 300 and 400 of FIGS. 3 and 4, for deployment to perform inference, i.e., to generate new 2D geometry images.

In general 610 and 615 can be repeatedly performed for any of a variety of fine-tuning training datasets that can be obtained by the system. For example, at each iteration of 610, the system can obtain a different, e.g., targeted, set of training image data that includes 2D geometry images representing a different, e.g., target, type of the object, and then, at 615, the system fine-tunes the diffusion model by using the different fine-tuning dataset to generate a targeted fine-tuned diffusion model that is specific to the different type of the object. In this way the same pre-trained diffusion model can be re-trained to generate different fine-tuned diffusion models.

At 620, the fine-tuned diffusion model can be retrained based on a targeted set of training image data comprising two-dimensional geometry images representing a target type of the object. For example, the retraining can be performed for objects of type vehicle, or on particular types of vehicles. In some instances, the retraining can be done to focus on shape specifics of different types of objects.

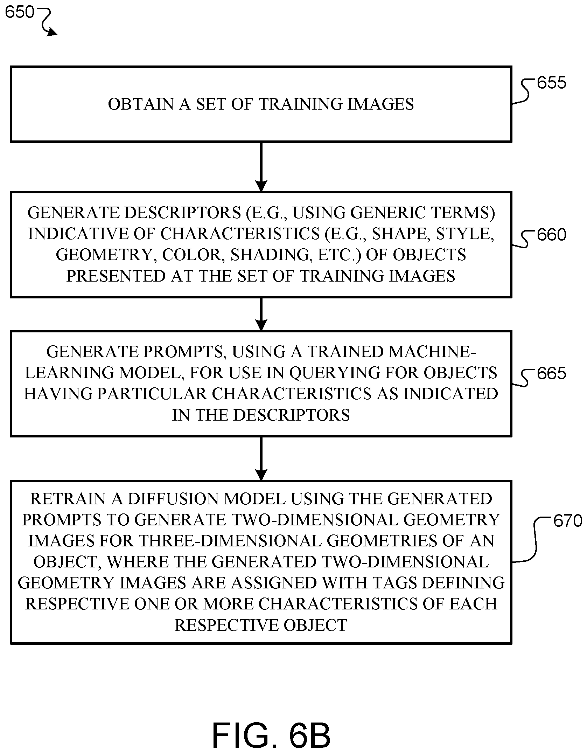

FIG. 6B is an example of a process 650 for retraining a diffusion model to generate prompts based on generic descriptors of characteristics of 3D shapes of objects to generate 3D meshes in accordance with implementations of the present disclosure.

At 655, a set of training images is obtained. The set of training images can include a plurality of 2D geometry images. Each 2D geometry image characterizes a geometry of an object.

At 660, descriptors (e.g., using generic terms) indicative of characteristics (e.g., type, shape, style, geometry, color, shading, etc.) of objects presented at the set of training images are automatically generated using a trained machine-learning model. The descriptors include natural language text that describes the characteristics of the objects.

For example, the trained machine-learning model can be a multi-modal neural network that has been trained on a plurality of prestored image-text pairs, where each image-text pair includes an image that is paired with text (e.g., a caption of the image or a description an object depicted in the image) based on optimizing a contrastive learning objective function.

The contrastive learning obj ective, when applied to train the multi-modal neural network, pushes the embeddings generated from each sensor image-text pair closer together in a co-embedding space, i.e., reduces the distance between the textual embedding and the image embedding generated by the multi-modal neural network from the text and the image in each pair, respectively, while pushing the embeddings generated from the images and text across different pairs (e.g., within a same batch of image-text pairs sampled from the set of training data) apart in the co-embedding space. For example, the contrastive learning objective function can be the contrastive language-image pre-training (CLIP) objective function described in Radford, Alec, et al. "Learning transferable visual models from natural language supervision." International conference on machine learning. PMLR, 2021.

At 665, one or more queries are generated based on the descriptors. The queries can be generated for use in querying set of training images to retrieve a particular subset of 2D geometry images of objects having particular characteristics as indicated in the descriptors. For example, the objects can include vehicles, where the plurality of 2D geometry images characterize geometries of a range of different vehicles. In that example, a query of a particular type of a vehicle (e.g., "sporty car") can be generated and used to retrieve a particular subset of 2D geometry images that characterize geometries of vehicles having the particular type. It can be appreciated that objects can be classified into different types, for example, vehicles can be classified to types including coupe cars, sporty sedans, racing cars, and vans, among other examples.

At 670, a diffusion model (e.g., such as the diffusion models described in relation to FIGS. 5A, 5B, and 6A) can be retrained using the particular subset of 2D geometry images retrieved using the one or more queries to generate two-dimensional geometry images for three-dimensional geometries of objects that have characteristics similar to the particular characteristics. In some cases, the retraining involves learning retrained values of at least some of the parameters of the diffusion model, where retraining begins from the fine-tuned values of the parameters of the diffusion model that have been determined as a result of performing the process 600 in FIG. 6A.

FIG. 7 is an example of a process 700 for 2D parameterization of a 3D mesh. In some implementations, the 2D parameterization of a 3D mesh can occur in the following example sequence of stages 1-6 at a system implemented as computer programs on one or more computers in one or more locations. In some implementations, the 2D parameterization can be performed to capture a 3D surface of an object as a 2D array of values so that vertices of the 3D mesh representing the 3D surface can be mapped to pixels of the 2D array. The process 700 can be executed, for example, for a 3D mesh that is rendered for editing in a visual programming interface, and a 2D geometry image is generated to be mapped to the 3D mesh to be used for editing portions of the 3D mesh, as described in relation to FIG. 4.

At stage 1, the system obtains a 3D mesh dataset that includes a plurality of 3D meshes. A 3D mesh refers to a collection of polygons corresponding to a reconstructed 3D model of an object. A 3D mesh includes a collection of polygons including vertices, edges, and faces (e.g., areas bounded by the vertices and edges) that represents a geometry, e.g., a shape, of the object. At stage 2, the system normalizes the plurality of 3D meshes in the 3D mesh dataset to generate, for each 3D mesh, a normalized 3D mesh. At stage 3, the system performs a 3D to 2D parameterization processing on the normalized 3D meshes. That is, the system converts the normalized 3D meshes into 2D geometry images.

For example, the 3D to 2D parameterization processing can use half-spherical projection techniques. Half-spherical projection techniques can be used to sample a 3D mesh and then re-mesh it using a UV parameterization of the half hemisphere by incorporating the geometric information of the 3D mesh into the 2D geometry image. UV parameterization, also known as UV mapping, is the process of mapping a 3D surface to a 2D plane, where a parameter (U or V) is a value that describes the position along the length of a curve (U) or a surface (UV). This parameter can be used to calculate the XYZ position of every point of a curve or surface. One common example of UV mapping is representing a 3D object as a triangle mesh and explicitly assigning each vertex on the mesh to a point on the UV plane.

Half-spherical projection techniques can be useful when processing objects that have a symmetric shape. Examples of half-spherical projections include equal angle and equal area projections. The basis of these two half-spherical projections is an imaginary sphere of radius R called the reference sphere. The sphere is positioned with its center at the center of the area of projection. A horizontal diametral plane passing through the center of the sphere is called projection plane. It divides the sphere into an upper and lower hemisphere. The intersection of the projection plane with the reference sphere is called reference circle. Any line or plane to be projected onto the projection plane is made to pass through the origin of the sphere. Such techniques allow for providing a balance between maintaining the overall geometry of a 3D mesh in a corresponding 2D geometry image and occluding at least a part of the 3D mesh by virtue of the way the 3D mesh is projected for re-meshing.

At stage 4, the system obtains, for each normalized 3D mesh, a 2D geometry image and a 2D attribute image as a result of the 3D to 2D parameterization processing. For each normalized 3D mesh, the 2D geometry image and the 2D attribute image each encode a 3D geometry of the object into a 2D array of pixels.

In example of FIG. 7, each pixel in the 2D array of pixels of the 2D geometry image has one or more displacement values that define a location, e.g., a Cartesian (X, Y, Z) position, of a respective one of a plurality of vertices included in a normalized 3D mesh of an object. Each pixel in the 2D array of pixels of the 2D attribute image has one or more of: a surface normal value that defines a surface normal of the object at the location; a texture value that defines a texture of the object at the location; or a segmentation value that defines a segmentation of the object at the location.

At stage 5, the system performs, for each normalized 3D mesh, a reconstruction processing on the 2D geometry image and the 2D attribute image to reconstruct the normalized 3D mesh from the 2D geometry image and the 2D attribute image. At stage 6, the system obtains, for each normalized 3D mesh, a reconstructed 3D mesh as a result of the reconstruction processing. The reconstructed 3D mesh is a predicted reconstruction of the normalized 3D mesh that is generated as a result of the reconstruction processing performed at stage 5.

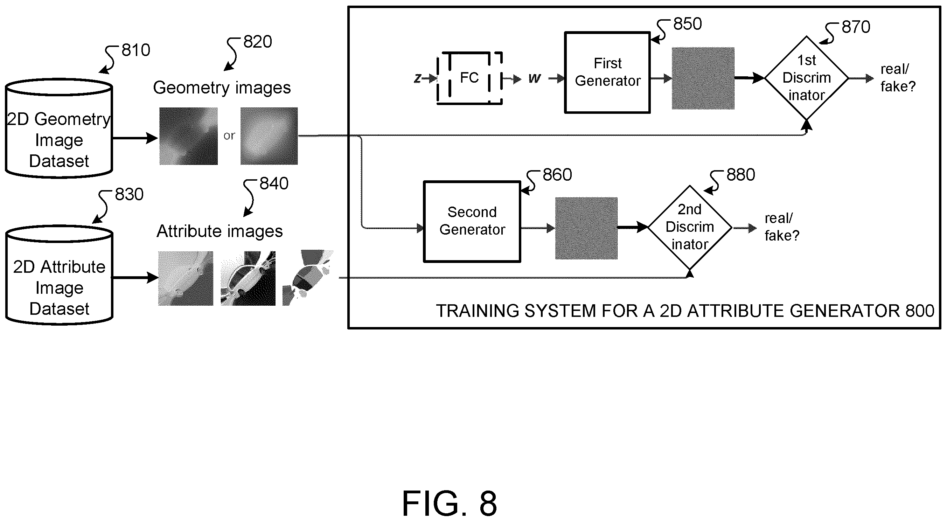

FIG. 8 is an example of a system 800 (e.g., a system implemented as computer programs on one or more computers in one or more locations) for training a 2D attribute generator neural network jointly with a 2D attribute discriminator neural network under a generative adversarial network (GAN) training framework.

To perform the training, the system obtains a 2D geometry image dataset 810 that includes a plurality of 2D geometry images 820. Each 2D geometry image 820 has a 2D array of pixels. Each pixel in the 2D array of pixels of the 2D geometry image 820 has a geometry value that defines a location, e.g., a definite Cartesian (X, Y, Z) position or a relative displacement, of a respective one of a plurality of vertices included in a normalized 3D mesh of an object.

In some implementations, the system 800 can obtain a 2D attribute image dataset 830 that includes a plurality of 2D attribute images 840. Each 2D attribute image has a 2D array of pixels. Each pixel in the 2D array of pixels of the 2D attribute image has one or more of: a surface normal value that defines a surface normal of the object at the location; a texture value that defines a texture of the object at the location; or a segmentation value that defines a segmentation of the object at the location.

In some implementations, the system 800 can train a first generator neural network 850 together with a first discriminator neural network 870 by using the 2D geometry image dataset 810. For example, the first generator neural network 850 and the first discriminator neural network 870 can be generator neural network and discriminator neural network, respectively, described in Tero Karras, Miika Aittala, Samuli Laine, Erik Härkönen, Janne Hellsten, Jaakko Lehtinen, and Timo Aila. Alias-free generative adversarial networks. In Proc. NeurIPS, 2021, which is hereby incorporated by reference. Specifically, Tero Karras, et al. describes a generator neural network that includes two components: a mapping neural network that transforms random noise (e.g., an initial, normally distributed noise) to an intermediate latent representation. Then, a synthesis neural network generates an output image based on the intermediate latent representation and a learned input by applying a sequence of operations-including convolutions, nonlinearities, upsampling, and per-pixel noise.

In particular, the system trains the first generator neural network 850 to generate, based on random noise z, predicted 2D geometry images that are indistinguishable from the 2D geometry images 820 from the 2D geometry image dataset 810. For example, the predicted 2D geometry image can include a 2D array of pixels, where each pixel has a geometry value that defines a location of a respective one of a plurality of vertices included in a normalized 3D mesh of an object.

Additionally, the system trains the first discriminator neural network 870 to tell apart the predicted 2D geometry images that have been generated by the first generator neural network 850 and the 2D geometry images 820 from the 2D geometry image dataset 810, for example, by providing a prediction value of 1("true") if a discriminator network input is classified as a 2D geometry image (namely it is classified as "real") and 0 ("false") if predicted 2D geometry image (namely it is classified as "fake").

In some implementations, the system 800 can train a second generator neural network 860 together with a second discriminator neural network 880 by using the 2D attribute image dataset 830. For example, the second generator neural network 860 and the second discriminator neural network 880 can be generator neural network and discriminator neural network, respectively, described in Taesung Park, Ming-Yu Liu, Ting-Chun Wang, and Jun-Yan Zhu. Semantic image synthesis with spatially-adaptive normalization. In Proceedings of the IEEE Conference on Computer Vision and Pattern Recognition, 2019, which is hereby incorporated by reference.

Similarly, the system 800 can train the second generator neural network 860 to generate, based on the 2D geometry images, predicted 2D attribute images that are indistinguishable from the 2D attribute images 840 from the 2D geometry image dataset. For example, the predicted 2D attribute image can include a 2D array of pixels, where each pixel has one or more values that define attributes of a normalized 3D mesh of an object, e.g., a surface normal value that defines a surface normal of the object at the location; a texture value that defines a texture of the object at the location; a segmentation value that defines a segmentation of the object at the location; and so on.

Additionally, the system trains the second discriminator neural network 860 to tell apart the predicted 2D attribute images that have been generated by the second generator neural network and the 2D attribute images 840 from the 2D geometry image dataset, for example, by providing a prediction value of 1 ("true) if a discriminator network input is classified as a 2D geometry image (namely it is classified as "real") and 0 ("false") if predicted 2D geometry image (namely it is classified as "fake").

In effect the second discriminator neural network 860 produce an output which represents a difference between predicted 2D attribute images generated by the second generator neural networks 860 and the 2D attribute images 840 from the 2D attribute image dataset 830. This is used as a training signal to adjust parameters of the second generator neural network 860, to encourage it to generate predicted 2D attribute images that match the 2D attribute images 840 from the 2D attribute image dataset 830.

Once the system 800 has been trained, the second generator neural network can be used as the 2D attribute generator 250 in the 3D mesh generation system 116 of FIG. 1 to generate 3D meshes of different types. On the other hand, the first and second discriminator neural networks are no longer required for inclusion in the 3D mesh generation system 116, and if desired, may be discarded.

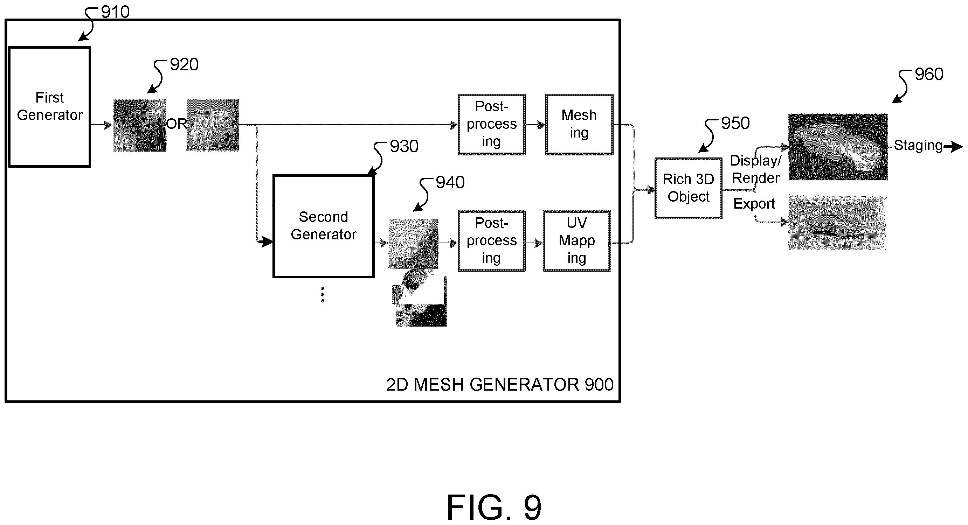

FIG. 9 is an example of a system 900 (e.g., implemented as computer programs on one or more computers in one or more locations) for generating a 3D mesh 960 of an object using 2D generator neural networks. In particular, the system 900 uses a first generator neural network 910 and a second generator neural network 930 for generating a 3D mesh 960. In some implementations, the first and second generator neural networks 910, 930 can have been trained under a generative adversarial network (GAN) training framework by performing operations described above with reference to FIG. 8.

The first generator neural network 910 generates a 2D geometry image 920. Each 2D geometry image 920 has a 2D array of pixels. Each pixel in the 2D array of pixels of the 2D geometry image 920 has a geometry value that defines a location, e.g., a Cartesian (X, Y, Z) position, of a respective one of a plurality of vertices included in a normalized 3D mesh of an object.

The second generator neural network 930 generates a 2D attribute image 940. Each 2D attribute image 940 has a 2D array of pixels. As discussed above with reference to the 2D attribute image 260 in FIG. 2, each pixel in the 2D array of pixels of the 2D attribute image 940 has one or more of: a surface normal value that defines a surface normal of the object at the location; a texture value that defines a texture of the object at the location; or a segmentation value that defines a segmentation of the object at the location.

The system applies one or more of: post-processing operations, meshing operations, or UV mapping operations on either the 2D geometry image 920 or the 2D attribute image 940 to generate a "rich" 3D object 950. The rich 3D object 950 is called "rich" because it additionally enriches the geometry information that is typically included in a 3D object with attribute information (e.g., textures, colors, surface normals, occlusions, or object or semantic segmentations). For example, the post-processing operations can include a smoothing operation and a de-noising operation. The system then renders the rich 3D object 950 to generate a 3D mesh and outputs the 3D mesh for display. Additionally, the system can provide the 3D mesh 960 to one or more external systems for further processing, e.g., for staging. Further additionally, the system can provide the 3D mesh 960 to one or more external systems for storage.

FIG. 10 is an example process 1000 for editing a 3D mesh of an object in accordance with implementations of the present disclosure. For convenience, the process 400 will be described as being performed by a system of one or more computers located in one or more locations. For example, a 3D mesh generation system, e.g., the 3D mesh generation system 116 depicted in FIG. 1, the 3D mesh generation system 200 depicted in FIG. 2, and appropriately programmed in accordance with this specification, can perform the process 1000.

At 1005, the system presents a 3D mesh of an object for display, e.g., through the user interface (UI) 122 on the display device 120 of the computer 110 of FIG. 1, through a virtual programming interface as discussed in relation to FIG. 4, other. The 3D mesh includes a first plurality of vertices. The 3D mesh is mapped to a first 2D geometry image according to a segmentation map. The first 2D geometry image includes a 2D array of pixels, where each pixel represents a location of one of the first plurality of vertices included in the 3D mesh. For example, the 3D mesh can have been generated by the system by using a diffusion neural network and a 3D generator neural network, as described above. As another example, the 3D mesh can be obtained from a storage device.

At 1010, the system receives a text description at the user interface of the display device. The text description is indicative of a target characteristic for a first portion of the object.

At 1015, the system selects a region of the 3D mesh corresponding to the first portion of the object. For example, the target characteristic can be a target geometry, and the selected region of the 3D mesh is associated with an initial geometry that is different from the target geometry.

At 1020, the system detects one or more segments of the 2D geometry image that correspond to the selected region according to the segmentation map.

At 1025, the system generates, by using the diffusion model, a second 2D geometry image by refining the first 2D geometry image at the one or more segments according to the text description. The second 2D geometry image includes a 2D array of pixels, where each pixel represents a location of one of a second plurality of vertices included in a second 3D mesh.

In some implementations, a fine-tuned diffusion model, such as the fine-tuned diffusion model as described in relation to FIG. 6A, can be used to generate an adjusted masked region to replace the selected region of the 3D mesh based on the text description that was received at 1010. The text description can define an attribute of the selected region of the three-dimensional mesh to be modified, for example, geometry shape, surface characteristics, other. Based on using the fine-tuned diffusion model, an adjusted masked region can be generated as a 2D geometry image and used to adjust a two-dimensional image mapped to the 3D mesh in place of the selected region without regenerating the whole 3D mesh.

In particular, the system refrains from updating the remaining segments of the first 2D geometry image that do not correspond to the selected region. In this way, the second 2D geometry image will include some segments that are different from the first 2D geometry image and some other segments that are identical with the first 2D geometry image.

In implementations the system can do this by generating a 2D mask that identifies the one or more segments of the 2D geometry image that correspond to the selected region. The 2D mask is a digital representation of those areas (segments) of the 2D geometry image that correspond to the selected region of the 3D mesh, and those areas (segments) that do not correspond to the selected region of the 3D mesh. For example, the mask can be a binary mask, that has the same dimension as the 2D geometry image, and assigns each pixel of the 2D array of pixels of the 2D geometry image as either part of the selected region or not part of the selected region. The system can then process the text description received at 410 and the 2D mask by using the diffusion model 230 to generate the second 2D geometry image.

At 1030, the system generates, based on the second 2D geometry image, the second 3D mesh. The second 3D mesh includes the second plurality of vertices. Each vertex has a corresponding location that is defined by the second 2D geometry image.

At 1035, the system presents the second 3D mesh of the object for display, e.g., through the user interface (UI) 122 on the display device 120 of the computer 110 of FIG. 1.

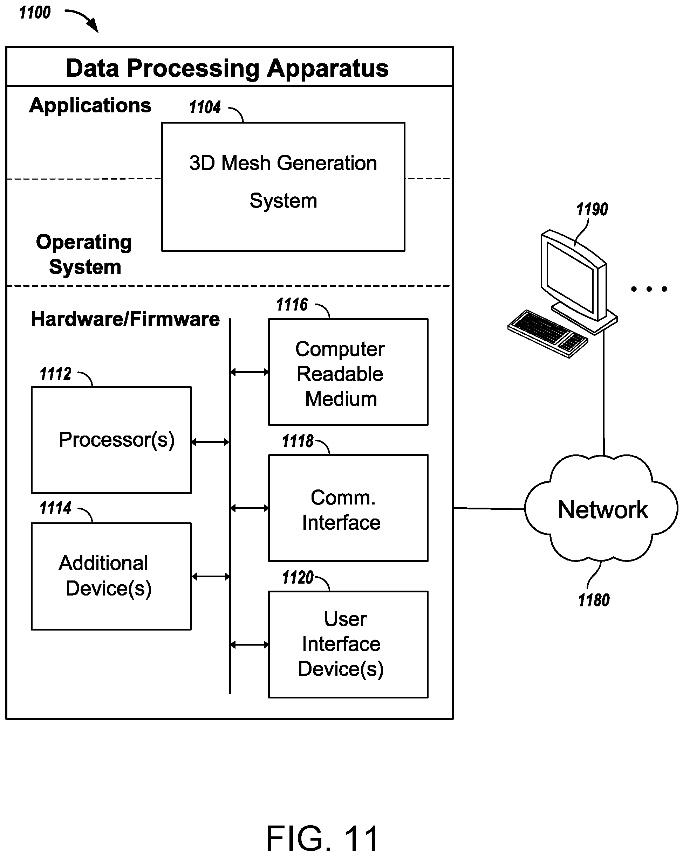

FIG. 11 shows a schematic diagram of a data processing system including a data processing apparatus 1100, which can be programmed as a client or as a server to implement the embodiments described in this specification. The data processing apparatus 1100 is connected with one or more computers 1190 through a network 1180. While only one computer is shown in FIG. 11 as the data processing apparatus 1100, multiple computers can be used. The data processing apparatus 1100 includes various software modules, which can be distributed between an applications layer and an operating system. These can include executable and/or interpretable software programs or libraries, including tools and services of the 3D mesh generation system 1104 that implement logic for generating and/or editing a 3D mesh using a fine-tuned diffusion model conditioned on received text description specifying a 3D geometry of an object, to generate 2D geometry image data to be used to presenting 3D geometry and generating the 3D mesh according to the techniques described above. The 3D mesh generation system 1104 can generate 3D meshes of objects of different types, and can support interactive editing of 3D meshes based on received requests for modifying at least a portion of a rendered 3D mesh.

The data processing apparatus 1100 also includes hardware or firmware devices including one or more processors 1112, one or more additional devices 1114, a computer readable medium 1116, a communication interface 1118, and one or more user interface devices 1120. Each processor 1112 is capable of processing instructions for execution within the data processing apparatus 1100. In some implementations, the processor 1112 is a single or multi-threaded processor. Each processor 1112 is capable of processing instructions stored on the computer readable medium 1116 or on a storage device such as one of the additional devices 1114. The data processing apparatus 1100 uses the communication interface 1118 to communicate with one or more computers 1190, for example, over the network 1180. Examples of user interface devices 1120 include a display, a camera, a speaker, a microphone, a tactile feedback device, a keyboard, a mouse, and VR and/or AR equipment. The data processing apparatus 1100 can store instructions that implement operations associated with the program(s) described above, for example, on the computer readable medium 1116 or one or more additional devices 1114, for example, one or more of a hard disk device, an optical disk device, a tape device, and a solid state memory device.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented using one or more modules of computer program instructions encoded on a non-transitory computer-readable medium for execution by, or to control the operation of, data processing apparatus. The computer-readable medium can be a manufactured product, such as hard drive in a computer system or an optical disc sold through retail channels, or an embedded system. The computer-readable medium can be acquired separately and later encoded with the one or more modules of computer program instructions, e.g., after delivery of the one or more modules of computer program instructions over a wired or wireless network. The computer readable medium can be a machine-readable storage device, a machine-readable storage substrate, a memory device, or a combination of one or more of them.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, a runtime environment, or a combination of one or more of them. In addition, the apparatus can employ various different computing model infrastructures, such as web services, distributed computing and grid computing infrastructures.

A computer program (also known as a program, software, software application, script, or code) can be written in any suitable form of programming language, including compiled or interpreted languages, declarative or procedural languages, and it can be deployed in any suitable form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magnetooptical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of nonvolatile memory, media and memory devices, including by way of example semiconductor memory devices, e.g., EPROM (Erasable Programmable Read-Only Memory), EEPROM (Electrically Erasable Programmable Read-Only Memory), and flash memory devices; magnetic disks, e.g., internal hard disks or removable disks; magnetooptical disks; and CDROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., an LCD (liquid crystal display) display device, an OLED (organic light emitting diode) display device, or another monitor, for displaying information to the user, and a keyboard and a pointing device, e.g., a mouse or a trackball, by which the user can provide input to the computer. Other kinds of devices can be used to provide for interaction with a user as well; for example, feedback provided to the user can be any suitable form of sensory feedback, e.g., visual feedback, auditory feedback, or tactile feedback; and input from the user can be received in any suitable form, including acoustic, speech, or tactile input.

The computing system can include clients and servers. A client and server are generally remote from each other and typically interact through a communication network. The relationship of client and server arises by virtue of computer programs running on the respective computers and having a client-server relationship to each other. Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a browser user interface through which a user can interact with an implementation of the subject matter described is this specification, or any combination of one or more such back-end, middleware, or front-end components. The components of the system can be interconnected by any suitable form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many implementation details, these should not be construed as limitations on the scope of what is being or may be claimed, but rather as descriptions of features specific to particular embodiments of the disclosed subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

### EMBODIMENTS

Embodiment 1. A computer-implemented method for generating a three-dimensional mesh of an object, wherein the method comprises:
receiving a text description that specifies a target three-dimensional geometry of a surface of the object;
generating, using a diffusion model and based on the text description, a two-dimensional geometry image that encodes the target three-dimensional geometry into a two-dimensional array of pixels, wherein each pixel of the two-dimensional array of pixels represents a vertex of a plurality of vertices of the three-dimensional mesh that is to be generated for the object; and
generating, based on the two-dimensional geometry image, the three-dimensional mesh of the object for rendering at a display of a physical device, wherein the three-dimensional mesh comprises the plurality of vertices defining a shape of the object, each vertex of the plurality of vertices having a corresponding location that is determined based on the two-dimensional geometry image.

Embodiment 2. The computer-implemented method of Embodiment 1, wherein generating the three-dimensional mesh of the object comprises:
generating, using a two-dimensional attribute generator neural network and based on the two-dimensional geometry image, a two-dimensional attribute image, wherein the two-dimensional attribute image includes, for each pixel of the two-dimensional array of pixels included in the two-dimensional geometry image, one or more attribute values of a corresponding vertex represented by the pixel, and wherein the three-dimensional mesh of the object is generated, based on the two-dimensional geometry image and the two-dimensional attribute image.

Embodiment 3. The computer-implemented method of Embodiment 2, wherein the one or more attribute values represent at least one of a texture, a color, a surface normal, or a segmentation of the corresponding vertex represented by the pixel.

Embodiment 4. The computer-implemented method of Embodiment 2, further comprising:
generating a segmentation map for the three-dimensional mesh, wherein the segmentation map defines a mapping between each segment of the three-dimensional mesh and a respective one or more segments of the two-dimensional geometry image.

Embodiment 5. The computer-implemented method of any one of the preceding Embodiments, wherein generating the three-dimensional mesh comprises:
computing at least a portion of the surface of the object based on the three-dimensional mesh; and
rendering, based on the generated three-dimensional mesh, at least the portion of the surface of the object to the display device at a visual programming interface.

Embodiment 6. The computer-implemented method of any one of the preceding Embodiments, comprising:
rendering the three-dimensional mesh of the object in a computer-aided design program interface displayed at the displayed device.

Embodiment 7. The computer-implemented method of Embodiment 2, wherein the text description is a first text description received as a first input from a user at a visual programming interface, and wherein the method comprises:
receiving a second input through the visual programming interface, wherein the second input comprises i) a direct user interaction with a rendered portion of object and ii) a second text description, wherein the direct user interaction includes a select of a portion of the rendered portion of the object to request a modification for the selected portion;
in response to receiving the second input, identifying a segment of the three-dimensional mesh associated with the selected portion to identify one or more segments of the three-dimensional mesh based on the segmentation map;
mapping the identified segment to one or more segments of the two-dimensional geometry image;
using the diffusion model based the second text description as a prompt to generate one or more second two-dimensional images to be used for modifying the three-dimensional mesh at the locations of the one or more segments of the three-dimensional mesh; and
generating a modified version of the three-dimensional mesh based on using the generated one or more second two-dimensional geometry images to modify the three-dimensional mesh based on mapping according to the segmentation map.

Embodiment 8. The computer-implemented method of Embodiment 7, wherein the second text description is indicative of a different shape or texture to be applied to the segment of the object.

Embodiment 9. The computer-implemented method of any one of the preceding Embodiments, wherein the diffusion model has been pre-trained on a first set of training image data and fine-tuned on a second set of training image data that comprises, the second set of training image data comprising metadata being indicative of a type of the obj ect.

Embodiment 10. The computer-implemented method of any one of the preceding Embodiments, comprising:
providing the three-dimensional mesh for use in manufacturing a physical structure corresponding to the object, and the providing comprises:
generating a toolpath specification for a manufacturing machine using the three-dimensional mesh.

Embodiment 11. A computer-implemented method comprising:
presenting a three-dimensional mesh of an object, the three-dimensional mesh comprising a first plurality of vertices, wherein the three-dimensional mesh is mapped to a first two-dimensional geometry image according to a segmentation map;
receiving, at a user interface of a display device, text description that is indicative of a target characteristic for a first portion of the object;
selecting a region of the three-dimensional mesh corresponding to the first portion of the object;
detecting one or more segments of the two-dimensional geometry image that correspond to the selected region according to the segmentation map;
generating, using a diffusion model, a second two-dimensional geometry image by refining the first two-dimensional image at the one or more segments according to the text description;
generating, based on the second two-dimensional geometry image, a second three-dimensional mesh comprising a second plurality of vertices, each vertex having a corresponding location that is defined by the second two-dimensional geometry image; and
presenting, at the user interface, the second three-dimensional mesh as a new version of the object.

Embodiment 12. The computer-implemented method of Embodiment 11, wherein each of the first two-dimensional geometry image and the second two-dimensional geometry image comprises a respective two-dimensional array of pixels, each pixel representing a location of one of a plurality of vertices of a respective three-dimensional mesh of the object.

Embodiment 13. The computer-implemented method of Embodiment 11 or Embodiment 12, wherein the target characteristic is a target geometry, and wherein the selected region of the three-dimensional mesh is associated with an initial geometry different from the target geometry.

Embodiment 14. A computer-implemented method for fine-tuning a diffusion model, wherein the method comprises:
obtaining data specifying the diffusion model, the data comprising pre-trained values of parameters of the diffusion model;
obtaining a fine-tuning training dataset that comprises a plurality of two-dimensional geometry images, wherein each two-dimensional geometry image of the plurality of two-dimensional images (i) characterizes a geometry of an object and (ii) is associated with a text description of the characterized geometry; and
fine-tuning the diffusion model by using the fine-tuning dataset to generate a fine-tuned diffusion model, wherein the fine-tuning comprises learning fine-tuned values of at least some of the parameters of the diffusion model beginning from the pre-trained values of the parameters of the diffusion model.

Embodiment 15. The computer-implemented method of Embodiment 14, wherein a two-dimensional geometry image of the plurality of two-dimensional images represents an exterior of a shape of the object.

Embodiment 16. The computer-implemented method of Embodiment 14 or Embodiment 15, comprising:
receiving an input text description that specifies a target geometry of at least a portion of a surface of an object, wherein the text description is for use in generating a two-dimensional geometry image for use in generating a three-dimensional mesh of at least the portion of the object;
generating, using the fine-tuned diffusion model and based on the text description, the two-dimensional geometry image that encodes the target geometry into a two-dimensional array of pixels, wherein each pixel of the two-dimensional array of pixels represents a vertex of a plurality of vertices of the three-dimensional mesh that is to be generated for the object; and
generating, based on the two-dimensional geometry image, the three-dimensional mesh of the object for rendering at a display of a physical device.

Embodiment 17. The computer-implemented method of Embodiment 15, wherein the three-dimensional mesh comprises a plurality of vertices defining a shape of the object, each vertex of the plurality of vertices having a corresponding location that is determined based on the two-dimensional geometry image.

Embodiment 18. The computer-implemented method of any one of Embodiments 14 to 17, comprising:
retraining the fine-tuned diffusion model based on a targeted set of training image data comprising two-dimensional geometry images representing a target type of the object.

Embodiment 19. The computer-implemented method of any one of Embodiments 14 to 17, comprising:
receiving a three-dimensional mesh of the object for rendering at a display of a physical device;
receiving a selection of a region of the three-dimensional mesh;
using the fine-tuned diffusion model to generate an adjusted masked region to replace the selected region of the three-dimensional mesh based on a text description defining an attribute of the selected region of the three-dimensional mesh to be modified, wherein using the fine-tuned diffusion model comprises:
   generating the adjusted masked region as a two-dimensional geometry image;
   adjusting a two-dimensional image mapped to the three-dimensional mesh based on the generated adjusted masked region to generate an adjusted two-dimensional geometry image for the object; and
   providing an updated three-dimensional mesh of the object.

Embodiment 20. A computer-implemented method, the method comprising:
obtaining a set of training images;
generating descriptors (e.g., using generic terms) , using a trained machine-learning model, indicative of characteristics (e.g., shape, style, geometry, color, shading, etc.) of objects presented at the set of training images;
generating queries for use in querying for objects having particular characteristics as indicated in the descriptors; and
retraining a diffusion model using the generated queries to generate two-dimensional geometry images for three-dimensional geometries of an object, where the generated two-dimensional geometry images are assigned with tags defining respective one or more characteristics of each respective object.

Embodiment 21. A system comprising:
one or more computers; and
one or more storage devices communicatively coupled to the one or more computers, wherein the one or more storage devices store instructions that, when executed by the one or more computers, cause the one or more computers to perform operations of the respective method of any one of Embodiments 1-20.

Embodiment 22. One or more non-transitory computer storage media storing instructions that when executed by one or more computers cause the one or more computers to perform operations of the respective method of any one of Embodiments 1-20.

### EXAMPLES

Although the present application is defined in the attached claims, it should be understood that the present invention can also (additionally or alternatively) be defined in accordance with the following examples:
Example 1. A computer-implemented method for generating a three-dimensional mesh of an object, wherein the method comprises:
   receiving a text description that specifies a target three-dimensional geometry of a surface of the object;
   generating, using a diffusion model and based on the text description, a two-dimensional geometry image that encodes the target three-dimensional geometry into a two-dimensional array of pixels, wherein each pixel of the two-dimensional array of pixels represents a vertex of a plurality of vertices of the three-dimensional mesh that is to be generated for the object; and
   generating, based on the two-dimensional geometry image, the three-dimensional mesh of the object for rendering at a display device of a physical device, wherein the three-dimensional mesh comprises the plurality of vertices defining a shape of the object, each vertex of the plurality of vertices having a corresponding location that is determined based on the two-dimensional geometry image.
Example 2. The computer-implemented method of Example 1, wherein generating the three-dimensional mesh of the object comprises:
   generating, using a two-dimensional attribute generator neural network and based on the two-dimensional geometry image, a two-dimensional attribute image, wherein the two-dimensional attribute image includes, for each pixel of the two-dimensional array of pixels included in the two-dimensional geometry image, one or more attribute values of a corresponding vertex represented by the pixel, and wherein the three-dimensional mesh of the object is generated, based on the two-dimensional geometry image and the two-dimensional attribute image.
Example 3. The computer-implemented method of Example 2, wherein the one or more attribute values represent at least one of a texture, a color, a surface normal, or a segmentation of the corresponding vertex represented by the pixel.
Example 4. The computer-implemented method of Example 2, further comprising:
   generating a segmentation map for the three-dimensional mesh, wherein the segmentation map defines a mapping between each segment of the three-dimensional mesh and a respective one or more segments of the two-dimensional geometry image.
Example 5. The computer-implemented method of any one of the preceding Examples, wherein generating the three-dimensional mesh comprises:
   computing at least a portion of the surface of the object based on the three-dimensional mesh; and
   rendering, based on the generated three-dimensional mesh, at least the portion of the surface of the object to the display device at a visual programming interface.
Example 6. The computer-implemented method of any one of the preceding Examples, comprising:
   rendering the three-dimensional mesh of the object in a computer-aided design program interface displayed at the display device.
Example 7. The computer-implemented method of Example 2, wherein the text description is a first text description received as a first input from a user at a visual programming interface, and wherein the method comprises:
   receiving a second input through the visual programming interface, wherein the second input comprises i) a direct user interaction with a rendered portion of object and ii) a second text description, wherein the direct user interaction includes a select of a portion of the rendered portion of the object to request a modification for the selected portion;
   in response to receiving the second input, identifying a segment of the three-dimensional mesh associated with the selected portion to identify one or more segments of the three-dimensional mesh based on the segmentation map;
   mapping the identified segment to one or more segments of the two-dimensional geometry image;
   using the diffusion model based on the second text description as a prompt to generate one or more second two-dimensional images to be used for modifying the three-dimensional mesh at the locations of the one or more segments of the three-dimensional mesh; and
   generating a modified version of the three-dimensional mesh based on using the generated one or more second two-dimensional geometry images to modify the three-dimensional mesh based on mapping according to the segmentation map.
Example 8. The computer-implemented method of Example 7, wherein the second text description is indicative of a different shape or texture to be applied to the segment of the object.
Example 9. The computer-implemented method of any one of the preceding Examples, wherein the diffusion model has been pre-trained on a first set of training image data and fine-tuned on a second set of training image data, the second set of training image data comprising metadata being indicative of a type of the object.
Example 10. The computer-implemented method of any one of the preceding Examples, comprising:
   providing the three-dimensional mesh for use in manufacturing a physical structure corresponding to the object, and the providing comprises:
   generating a toolpath specification for a manufacturing machine using the three-dimensional mesh.
Example 11. A computer-implemented method comprising:
   presenting a three-dimensional mesh of an object, the three-dimensional mesh comprising a first plurality of vertices, wherein the three-dimensional mesh is mapped to a first two-dimensional geometry image according to a segmentation map;
   receiving, at a user interface of a display device, text description that is indicative of a target characteristic for a first portion of the object;
   selecting a region of the three-dimensional mesh corresponding to the first portion of the object;
   detecting one or more segments of the two-dimensional geometry image that correspond to the selected region according to the segmentation map;
   generating, using a diffusion model, a second two-dimensional geometry image by refining the first two-dimensional image at the one or more segments according to the text description;
   generating, based on the second two-dimensional geometry image, a second three-dimensional mesh comprising a second plurality of vertices, each vertex having a corresponding location that is defined by the second two-dimensional geometry image; and
   presenting, at the user interface, the second three-dimensional mesh as a new version of the object.
Example 12. The computer-implemented method of Example 11, wherein each of the first two-dimensional geometry image and the second two-dimensional geometry image comprises a respective two-dimensional array of pixels, each pixel representing a location of one of a plurality of vertices of a respective three-dimensional mesh of the object.
Example 13. The computer-implemented method of Example 11 or Example 12, wherein the target characteristic is a target geometry, and wherein the selected region of the three-dimensional mesh is associated with an initial geometry different from the target geometry.
Example 14. The computer-implemented method of any one of Examples 11 to 13, wherein the two-dimensional geometry image is generated to encode the selected region of the three-dimensional mesh into a two-dimensional array of pixels, wherein each pixel of the two-dimensional array of pixels represents a vertex of a plurality of vertices of the selected region of the three-dimensional mesh.
Example 15. The computer-implemented method of any one of Examples 11 to 14, wherein the segmentation map defines a mapping between each segment of the three-dimensional mesh and a respective one or more segments of the two-dimensional geometry image.
Example 16. The computer-implemented method of any one of Examples 11 to 15, wherein presenting the second three-dimensional mesh of the object comprises rendering the second three-dimensional mesh in a computer-aided design program interface displayed at a display device.
Example 17. The computer-implemented method of any one of Examples 11 to 16, wherein the text description is received as input from a user at a visual programming interface, wherein the three-dimensional mesh of an object is presented at the visual programming interface.
Example 18. The computer-implemented method of Examples 17, wherein the text description is indicative of a different shape or texture to be applied to the selected region of the three-dimensional mesh corresponding to the first portion of the object.
Example 19. The computer-implemented method of any one of Examples 11 to 18, wherein generating the second two-dimensional geometry image by refining the first two-dimensional image at the one or more segments according to the text description comprises:
   using a diffusion model based on the text description as a prompt to generate the second two-dimensional geometry image to be used for modifying the three-dimensional mesh at the selected region of the three-dimensional mesh.
Example 20. The computer-implemented method of Examples 19, wherein the diffusion model has been pre-trained on a first set of training image data and fine-tuned on a second set of training image data, the second set of training image data comprising metadata being indicative of a type of the object.
Example 21. A computer-implemented method for fine-tuning a diffusion model, wherein the method comprises:
   obtaining data specifying the diffusion model, the data comprising pre-trained values of parameters of the diffusion model;
   obtaining a fine-tuning training dataset that comprises a plurality of two-dimensional geometry images, wherein each two-dimensional geometry image of the plurality of two-dimensional images (i) characterizes a geometry of an object and (ii) is associated with a text description of the characterized geometry; and
   fine-tuning the diffusion model by using the fine-tuning dataset to generate a fine-tuned diffusion model, wherein the fine-tuning comprises learning fine-tuned values of at least some of the parameters of the diffusion model beginning from the pre-trained values of the parameters of the diffusion model.
Example 22. The computer-implemented method of Example 21, wherein a two-dimensional geometry image of the plurality of two-dimensional geometry images represents an exterior of a shape of the object.
Example 23. The computer-implemented method of Example 21 or Example 22, comprising:
   receiving an input text description that specifies a target geometry of at least a portion of a surface of an object, wherein the text description is for use in generating a two-dimensional geometry image for use in generating a three-dimensional mesh of at least the portion of the object;
   generating, using the fine-tuned diffusion model and based on the text description, the two-dimensional geometry image that encodes the target geometry into a two-dimensional array of pixels, wherein each pixel of the two-dimensional array of pixels represents a vertex of a plurality of vertices of the three-dimensional mesh that is to be generated for the object; and
   generating, based on the two-dimensional geometry image, the three-dimensional mesh of the object for rendering at a display of a physical device.
Example 24. The computer-implemented method of Example 23, wherein the three-dimensional mesh comprises a plurality of vertices defining a shape of the object, each vertex of the plurality of vertices having a corresponding location that is determined based on the two-dimensional geometry image.
Example 25. The computer-implemented method of any one of Examples 21 to 24, comprising:
   retraining the fine-tuned diffusion model based on a targeted set of training image data comprising two-dimensional geometry images representing a target type of the object.
Example 26. The computer-implemented method of any one of Examples 21 to 24, comprising:
   receiving a three-dimensional mesh of the object for rendering at a display of a physical device;
   receiving a selection of a region of the three-dimensional mesh;
   using the fine-tuned diffusion model to generate an adjusted masked region to replace the selected region of the three-dimensional mesh based on a text description defining an attribute of the selected region of the three-dimensional mesh to be modified, wherein using the fine-tuned diffusion model comprises:
      generating the adjusted masked region as a two-dimensional geometry image;
      adjusting a two-dimensional image mapped to the three-dimensional mesh based on the generated adjusted masked region to generate an adjusted two-dimensional geometry image for the object; and
      providing an updated three-dimensional mesh of the object.
Example 27. A computer-implemented method, the method comprising:
   obtaining a set of training images;
   generating descriptors , using a trained machine-learning model, indicative of characteristics of objects presented at the set of training images;
   generating queries for use in querying for objects having particular characteristics as indicated in the descriptors; and
   retraining a diffusion model using the generated queries to generate two-dimensional geometry images for three-dimensional geometries of an object, where the generated two-dimensional geometry images are assigned with tags defining respective one or more characteristics of each respective object.
Example 28. The computer-implemented method of Example 27, wherein a descriptor of the descriptors consists of generic terms to indicate characteristics of an object of the objects, wherein the characteristics comprise at least one of shape, style, geometry, color, or shading.
Example 29. The computer-implemented method of Example 27 or Example 28, comprising:
   generating a three-dimensional mesh of an object using the retrained diffusion model, wherein generating the three-dimensional mesh comprises
      receiving a first descriptor that specifies a target three-dimensional geometry of a surface of the object, wherein the first descriptor consists of generic terms;
      generating, using the retrained diffusion model and based on the first descriptor, a two-dimensional geometry image that encodes the target three-dimensional geometry into a two-dimensional array of pixels; and
   generating, based on the two-dimensional geometry image, the three-dimensional mesh of the object for rendering at a display of a physical device.
Example 30. The computer-implemented method of Example 29, wherein generating the three-dimensional mesh of the object comprises:
   generating, using a two-dimensional attribute generator neural network and based on the two-dimensional geometry image, a two-dimensional attribute image, wherein the two-dimensional attribute image includes, for each pixel of the two-dimensional array of pixels included in the two-dimensional geometry image, one or more attribute values of a corresponding vertex represented by the pixel, and wherein the three-dimensional mesh of the object is generated, based on the two-dimensional geometry image and the two-dimensional attribute image,
   wherein the three-dimensional mesh comprises a plurality of vertices defining a shape of the object, each vertex of the plurality of vertices having a corresponding location that is determined based on the two-dimensional geometry image, and
   wherein the one or more attribute values represent at least one of a texture, a color, a surface normal, or a segmentation of the corresponding vertex represented by the pixel.
Example 31. A system comprising:
   one or more computers; and
   one or more storage devices communicatively coupled to the one or more computers, wherein the one or more storage devices store instructions that, when executed by the one or more computers, cause the one or more computers to perform operations of the respective method of any one of Examples 1-30.
Example 32. One or more non-transitory computer storage media storing instructions that when executed by one or more computers cause the one or more computers to perform operations of the respective method of any one of Examples 1-30.

## Claims

1. A computer-implemented method comprising:
presenting a three-dimensional mesh of an object, the three-dimensional mesh comprising a first plurality of vertices, wherein the three-dimensional mesh is mapped to a first two-dimensional geometry image according to a segmentation map;
receiving, at a user interface of a display device, text description that is indicative of a target characteristic for a first portion of the object;
selecting a region of the three-dimensional mesh corresponding to the first portion of the object;
detecting one or more segments of the first two-dimensional geometry image that correspond to the selected region according to the segmentation map;
generating, using a diffusion model, a second two-dimensional geometry image by refining the first two-dimensional image at the one or more segments according to the text description;
generating, based on the second two-dimensional geometry image, a second three-dimensional mesh comprising a second plurality of vertices, each vertex having a corresponding location that is defined by the second two-dimensional geometry image; and
presenting, at the user interface, the second three-dimensional mesh as a new version of the object.

2. The computer-implemented method of claim 1, wherein each of the first two-dimensional geometry image and the second two-dimensional geometry image comprises a respective two-dimensional array of pixels, each pixel representing a location of one of a plurality of vertices of a respective three-dimensional mesh of the object.

3. The computer-implemented method of claim 1 or claim 2, wherein the target characteristic is a target geometry, and wherein the selected region of the three-dimensional mesh is associated with an initial geometry different from the target geometry.

4. The computer-implemented method of any one of the preceding claims, wherein the first two-dimensional geometry image is generated to encode the selected region of the three-dimensional mesh into a two-dimensional array of pixels, wherein each pixel of the two-dimensional array of pixels represents a vertex of a plurality of vertices of the selected region of the three-dimensional mesh.

5. The computer-implemented method of any one of the preceding claims, wherein the segmentation map defines a mapping between each segment of the three-dimensional mesh and a respective one or more segments of the first two-dimensional geometry image.

6. The computer-implemented method of any one of the preceding claims, wherein presenting the second three-dimensional mesh of the object comprises rendering the second three-dimensional mesh in a computer-aided design program interface displayed at a display device.

7. The computer-implemented method of any one of the preceding claims, wherein the text description is received as input from a user at a visual programming interface, wherein the three-dimensional mesh of an object is presented at the visual programming interface.

8. The computer-implemented method of claim 7, wherein the text description is indicative of a different shape or texture to be applied to the selected region of the three-dimensional mesh corresponding to the first portion of the object.

9. The computer-implemented method of any one of the preceding claims, wherein generating the second two-dimensional geometry image by refining the first two-dimensional image at the one or more segments according to the text description comprises:
using a diffusion model based on the text description as a prompt to generate the second two-dimensional geometry image to be used for modifying the three-dimensional mesh at the selected region of the three-dimensional mesh.

10. The computer-implemented method of claim 9, wherein the diffusion model has been pre-trained on a first set of training image data and fine-tuned on a second set of training image data, the second set of training image data comprising metadata being indicative of a type of the object.

11. The computer-implemented method of claim 10, comprising fine-tuning the diffusion model comprising:
obtaining data specifying the diffusion model, the data comprising pre-trained values of parameters of the diffusion model;
obtaining a fine-tuning training dataset that comprises a plurality of two-dimensional geometry images, wherein each two-dimensional geometry image of the plurality of two-dimensional geometry images (i) characterizes a geometry of an object and (ii) is associated with a text description of the characterized geometry; and
fine-tuning the diffusion model by using the fine-tuning training dataset to generate a fine-tuned diffusion model, wherein the fine-tuning comprises learning fine-tuned values of at least some of the parameters of the diffusion model beginning from the pre-trained values of the parameters of the diffusion model.

12. The computer-implemented method of any one of the preceding claims, comprising:
generating the three-dimensional mesh of an object, the generating comprising:
receiving a text description that specifies a target three-dimensional geometry of a surface of the object;
generating, using a diffusion model and based on the text description, a two-dimensional geometry image that encodes the target three-dimensional geometry into a two-dimensional array of pixels, wherein each pixel of the two-dimensional array of pixels represents a vertex of a plurality of vertices of the three-dimensional mesh that is to be generated for the object; and
generating, based on the two-dimensional geometry image, the three-dimensional mesh of the object for rendering at a display device of a physical device, wherein the three-dimensional mesh comprises the plurality of vertices defining a shape of the object, each vertex of the plurality of vertices having a corresponding location that is determined based on the two-dimensional geometry image.

13. The computer-implemented method of claim 12, wherein generating the three-dimensional mesh of the object comprises:
generating, using a two-dimensional attribute generator neural network and based on the two-dimensional geometry image, a two-dimensional attribute image, wherein the two-dimensional attribute image includes, for each pixel of the two-dimensional array of pixels included in the two-dimensional geometry image, one or more attribute values of a corresponding vertex represented by the pixel, and wherein the three-dimensional mesh of the object is generated, based on the two-dimensional geometry image and the two-dimensional attribute image.

14. A system comprising:
one or more computers; and
one or more storage devices communicatively coupled to the one or more computers, wherein the one or more storage devices store instructions that, when executed by the one or more computers, cause the one or more computers to perform operations of the respective method of any one of claims 1-13.

15. One or more non-transitory computer storage media storing instructions that when executed by one or more computers cause the one or more computers to perform operations of the respective method of any one of claims 1-13.
